(19) Europäisches Patentamt
European Patent Office
Office européen des brevets

(11) **EP 4 181 032 A1**

(12) **EUROPEAN PATENT APPLICATION**

(43) Date of publication:
**17.05.2023 Bulletin 2023/20**

(21) Application number: **21208080.8**

(22) Date of filing: **12.11.2021**

(51) International Patent Classification (IPC):
***G06N 10/40*** (2022.01)  ***G06N 10/20*** (2022.01)
***G06N 10/80*** (2022.01)

(52) Cooperative Patent Classification (CPC):
**G06N 10/40; G06N 10/20; G06N 10/80**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Robert Bosch GmbH
70442 Stuttgart (DE)**

• **BASF SE
67069 Ludwigshafen am Rhein (DE)**

(72) Inventor: **Vogt, Nicolas Franz Wolfgang
76297 Stutensee (DE)**

(74) Representative: **Peterreins Schley
Patent- und Rechtsanwälte PartG mbB
Hermann-Sack-Straße 3
80331 München (DE)**

(54) **QUANTUM CONTROLLED OPERATIONS IN TWO-DIMENSIONAL QUANTUM COMPUTING SYSTEMS**

(57) One aspect of the present disclosure relates to a method for configuring a quantum computing system, wherein the quantum computing system comprises a plurality of qubits arranged on a two-dimensional (2D) lattice. The method of the present disclosure includes receiving a selection of first one or more qubits of the plurality of qubits, wherein the first one or more qubits are configured to be initialized to a predetermined information content. The method further comprises receiving a selection of a second plurality of qubits of the plurality of qubits, wherein one or more qubits of the second plurality of qubits are adjacent to respective at least one qubit of the first one or more qubits and are configured to receive the predetermined information content from the respective at least one qubit of the first one or more qubits. The method of the first aspect further includes receiving a selection of a third plurality of qubits of the plurality of qubits configured to perform a plurality of quantum computational operations. In the method of the first aspect, a quantum computational operation of the plurality of quantum computational operations on each qubit of the third plurality of qubits is controlled using the predetermined information content from the respective at least one qubit of the first one or more qubits. In the method of the first aspect, each qubit from a number of qubits of the second plurality of qubits is adjacent to at least one qubit of the third plurality of qubits and each qubit of the third plurality of qubits that is adjacent to a respective qubit from the number of qubits of the second plurality of qubits is configured to receive the predetermined information content from said respective qubit.

Fig. 2

EP 4 181 032 A1

## Description

## Technical field

This specification relates to a method for controlling a quantum computing system. Associated aspects concern quantum computing systems, and a remote computing system.

## Background

There is a growing interest for the implementation of quantum computations on various physical systems to solve a variety of real-world problems, such as those dealing with chemistry, biology, solid-state physics and cryptographic systems (see, e.g., E. Grumbling and M. Horowitz, "Quantum Computing: Progress and Prospects" Washington, DC: The National Academies Press, 2019; https://doi.org/10.17226/25196). The goal is to speed up calculations as compared to classical computers and/or to solve a class of problems that cannot be solved even on a supercomputer that performs classical computations based on classical algorithms. Many known quantum algorithms for the use in quantum computers (e.g., quantum simulators) used for modeling real quantum systems require the application of controlled unitary transformations to a subset of qubits (i.e., to their quantum state) implemented on a hardware (e.g., on a chip) of quantum computers on which quantum computations are performed. Here the control of the unitary transformation is not a classical control, where a classical value controls whether the transformation is applied, but a quantum control, where the unitary transformation is applied depending on the state of a quantum system, thereby creating quantum entanglement. An example for an algorithm that requires such controlled unitary transformations is the quantum phase estimation algorithm.

Importantly, potential physical realizations of quantum computers are prone to quantum decoherence related to the coupling of said physical realizations with the environment. However, some of the known prior art techniques for controlling quantum computations are time consuming, and as a result, quantum qubits may lose their coherence in a time interval that is smaller than that required to complete a quantum computational task. Therefore, there is a need for developing new efficient techniques for controlling a quantum computing system.

## Summary

A first aspect of the present disclosure relates to a method for configuring a quantum computing system, wherein the quantum computing system comprises a plurality of qubits arranged on a two-dimensional (2D) lattice. The method of the present disclosure includes receiving a selection of first one or more qubits of the plurality of qubits, wherein the first one or more qubits are configured to be initialized to a predetermined information content. The method further comprises receiving a selection of a second plurality of qubits of the plurality of qubits, wherein one or more qubits of the second plurality of qubits are adjacent to respective at least one qubit of the first one or more qubits and are configured to receive the predetermined information content from the respective at least one qubit of the first one or more qubits. The method of the first aspect further includes receiving a selection of a third plurality of qubits of the plurality of qubits configured to perform a plurality of quantum computational operations. In the method of the first aspect, a quantum computational operation of the plurality of quantum computational operations on each qubit of the third plurality of qubits is controlled using the predetermined information content from the respective at least one qubit of the first one or more qubits. In the method of the first aspect, each qubit from a number of qubits of the second plurality of qubits is adjacent to at least one qubit of the third plurality of qubits and each qubit of the third plurality of qubits that is adjacent to a respective qubit from the number of qubits of the second plurality of qubits is configured to receive the predetermined information content from said respective qubit.

A second aspect provides a quantum computing system configured in accordance with any of the steps of the techniques according to the first aspect.

A third aspect provides a quantum computing system to perform controlled quantum computational operations and adapted to carry out any of the steps of the techniques according to the first aspect.

A fourth general aspect of the present disclosure relates to a remote computing system comprising a quantum computing system and configured to perform a quantum computational task, wherein the quantum computational task can comprise a plurality of quantum computational operations to be executed on respective qubits in accordance with the first aspect. The plurality of quantum computational operations of the fourth aspect can be controlled in accordance with any one of the method steps of the first aspect. The remote computing system of the fourth aspect is further configured to transmit results of the computational task to a computer-implemented system.

The technique of the first to fourth aspects can have advantageous technical effects.

Firstly, the techniques of the present disclosure involve performing controlled quantum computational operations on a quantum computing system comprising a hardware architecture (e.g., one or more chips) having qubits arranged in a 2D lattice, with a reduced number of operations required for said control compared to some prior art techniques. In some cases, the number of SWAP operations between qubits necessary to provide the execution of a controlled operation on qubits increases more slowly with the number of qubits N compared to some prior art techniques. For example, in the present invention, transmitting a quantum state of an ancilla qubit used for controlling computational operation on the qubit may require a one-time operation scaled as $N^{1/2}$ with the number of qubits, while in some prior art techniques the transmission of said quantum state has to be carried out for each controlled operation on a qubit performed at different moments of time during quantum computations. Furthermore, a number of quantum gates necessary to accomplish the quantum computational task can be diminished by using qubit configurations of the present techniques, resulting in a reduction of the total decoherence or inaccuracies that occur in the quantum computing system: Each quantum gate may be a potential source of decoherence and/or inaccuracies related to the fact that a physical realization of a quantum gate may not match a user-specified logical gate operation (this problem is referred to as gate infidelity). Thus, a gain in reducing the total number of operations on qubits of the 2D lattice needed for performing controlled computational operations on respective qubits becomes more significant as compared to some prior art techniques, when the two aforementioned factors are considered together.

Secondly, the techniques of the present disclosure enable controlled quantum computational operations in parallel, which is not possible in some techniques of the prior art. This can provide an additional speed up of the controlled quantum computational operations, which may lead to preservation of coherence between qubits throughout the entire execution time of a quantum computational task.

Some terms are used in the present specification in the following manner:

The term "qubit" (or a quantum bit) may refer to a quantum-mechanical system with (at least) two quantum states or any superposition of these quantum states, which is also called a two-level system for short. The two-level system is an elementary unit carrying quantum information into which quantum information may be encoded and from which it can be retrieved. For instance, the spin of the electron in a magnetic field with two energy levels and corresponding spin-up and spin-down states is the physical realization of a qubit. Another physical realization deals with the polarization of a single photon in which two orthogonal polarizations can be considered as the two qubit states. In some cases, two quantum states may be associated with two different energy levels, for instance, two selected energy levels in an anharmonic energy spectrum (or, in other words, an anharmonic ladder of energy levels) of a physical system that serves as a physical realization of a qubit (this may be the case, e.g., with superconducting qubits). In other cases, two quantum states may be associated with two degenerate energy levels (i.e., they share the same energy value), which may be the case in photonic quantum computers. A quantum state of a single qubit can be described by a wavefunction, which can be represented as a vector in a two-dimensional complex space, and changes in its quantum state (e.g., owing to the time evolution of the qubit state and/or as a result of applying a quantum gate operation) may be visualized on a Bloch sphere (see, e.g., M. A. Nielsen and I. L. Chuang, "Quantum Computation and Quantum Information": 10th Anniversary Edition, Cambridge University Press, 2010). Quantum computing may involve quantum computational operations on multiple qubits (see also discussions below), such that their multi-qubit quantum state may be manipulated and changed. In some cases, each qubit of the multiple qubits can be treated independently from each other, in which case the multi-qubit quantum state may be written as a separable quantum state, i.e. it can be represented as a tensor product of each single-qubit state (and can ultimately be represented as a corresponding superposition of quantum states of individual qubits). In other cases, when at least two qubits from the multiple qubits cannot be treated independently from each other (or, in other words, they cannot be described separately from each other), the multi-qubit quantum state represents an entangled state that cannot be represented in terms of the tensor product of individual qubit states (see also discussions further below, where both situations are discussed in more details).

There are a number of physical realizations of systems that can be used as qubits (i.e., as two-level systems) in the context of quantum computing. The qubits of the present disclosure are not limited to a particular physical realization. An example of such physical realizations are quantum computers based on cavity quantum electrodynamics (cQED), where a qubit is provided by the internal state of trapped atoms coupled to high-finesse cavities. One example of quantum computing using circuit quantum electrodynamics is superconducting quantum computing based on superconducting qubits coupled to a microwave cavity (referred to as a quantum bus) and radiating in the microwave region, whose quantum state is manipulated by electromagnetic pulses to control a magnetic flux, an electric charge, or a phase difference across a nano-fabricated Josephson junction, see, e.g., https://doi.org/10.1038/nature07128. Another example relates to solid-state nuclear magnetic resonance (NMR) Kane quantum computers with qubits realized as the nuclear spin states of donor atoms (e.g., phosphorus donor atoms) embedded into a respective host lattice (e.g., in a pure silicon lattice). In some other examples, a physical implementation of a quantum computer may be based on neutral atoms in optical lattices, when a qubit is implemented by internal states of neutral atoms (e.g., Rydberg atoms) trapped in an optical lattice (which, e.g., interact via Rydberg interactions with each other), see, e.g., https://doi.org/10.1088/0953-4075/49/20/202001. In still other examples, a quantum computer can be a quantum dot computer, where a qubit is given by respective spin states of trapped electrons.

The term "quantum computational operations" and related term "quantum computation" may refer to operations on qubits that can change their quantum state. The quantum computational operations on one or multiple qubits can be carried out by quantum gates that manipulate a quantum state of the qubits or, in other words, with the quantum information carried by them. As is disclosed further below, a single qubit may form a single-qubit quantum state (e.g., a ground state, an excited state, or a superposition of both). In some cases, multiple qubits can form a multi-qubit quantum state that can be a tensor product state or an entangled state (see discussions below for more detail). Quantum gates are represented by unitary operators U (represented, e.g., by respective unitary matrices) that ensure the norm conservation of a qubit's wavefunction in the absence of dissipation, such that a product of this operator with its Hermitian conjugate is equal to the identity operator, $UU^\dagger = I$, where $\dagger$ stays for a Hermitian conjugate and $I$ is the identity operator. Thus, quantum gates are configured to perform unitary transformations on the qubits, that is, in other words, said unitary operators representing quantum gates perform the unitary transformations on a quantum state of qubits (see also discussions below). The Hadamard gate H, phase gate S, $\pi/8$-gate and Pauli X-, Y- and Z-gates are examples of single qubit gates whose action on a qubit can be visualized on the Bloch sphere mentioned above (see, e.g., the book by M. A. Nielsen and I. L. Chuang mentioned above). An arbitrary quantum computation on one or more qubits can be generated by a finite set of qubit gates that is said to be universal for quantum computation. In this case, any unitary operation representing this quantum computation on qubits may be decomposed into a set of operations performed by a quantum circuit comprising the gates from this finite set. Any unitary operation (e.g., a unitary operation performed on any multiple qubit logic gate) may be composed from two-qubit controlled-NOT (CNOT) gates and a corresponding number of single qubit gates, i.e., single-qubit rotations with a number of free parameters characterizing the unitary operation under consideration. For example, any unitary operation can be approximated (to a given accuracy) by means of Hadamard, phase, CNOT and $\pi/8$-gates that are also referred to as universal quantum gates (see, e.g., M. A. Nielsen and I. L. Chuang, "Quantum Computation and Quantum Information": 10th Anniversary Edition, Cambridge University Press, 2010). For example, in the context of superconducting qubits, single qubit gates can be realized by rotations between the two energy levels of a single superconducting qubit induced by microwave pulses sent to a transmission line coupled to the qubit, with a frequency resonant with the energy separation between the levels. Furthermore, two-qubit gates can be realized by coupling two superconducting qubits, for instance, via a microwave cavity or an intermediate electrical coupling circuit (see, e.g., https://doi.org/10.1038/nature02851). In the context of neutral-atom quantum computing, two-qubit gates can be realized using controllable Rydberg interactions between neutral atoms that are sufficiently strong to perform two-gate operations, see, e.g., https://doi.org/10.1103/PhysRevX.10.021054.

The term "unitary transformation" applied to qubits as used herein should be broadly construed in the present disclosure and may be referred to a unitary transformation of a quantum state of qubits caused by a unitary operation acting on said qubits, which can be defined by a unitary operator acting on their quantum state. For example, quantum computational operations, such as those applying different one- or multiple quantum gates (represented by respective unitary operators) to the qubits, can lead to unitary transformations of the quantum state of qubits. In other cases, the quantum state of qubits can evolve unitarily in accordance with a Hamiltonian of qubits (e.g., Jaynes-Cummings Hamiltonian in cQED), which is a Hermitian operator that determines their interactions with external controlling fields (e.g., a magnetic field), as well as qubits' coupling with a hosting lattice or cavities (e.g., quantum buses in the context of superconducting quantum computing) and their possible mutual interactions (such as, e.g., dipole-dipole interactions in the context of Rydberg atoms). This unitary time evolution of the quantum state of qubits (represented by a unitary time evolution operator) that occurs during quantum computing is also referred to as the "unitary transformation" in the present specification. As follows from the discussions above, a single-qubit rotation is a specific case of a unitary transformation.

The term "adjacency" (or the attribute "adjacent") with respect to qubits (arranged, e.g., on a 2D lattice) should be broadly construed in the present disclosure, so that two qubits may be classified as adjacent if universal quantum gates acting on the two qubits may be realized without requiring one or more separate quantum gates between any qubit of these two qubits and a third qubit. For example if the quantum computer provides all unitary operations related to a universal gate set acting on the two qubits without involving a third qubit or if they are coupled physically on hardware or if hardware-native two-qubit gates acting on the two qubits may be realized without requiring separate quantum gates between each individual qubit of the two qubits and a third qubit. In some examples, qubits may be classified as adjacent if, for example, they are nearest-neighbor qubits within the same or different species of qubits (e.g., one species can stand for control qubits while the other may represent system qubits on which quantum computational operations are performed) or if a distance between qubits under consideration is equal to or less than a predetermined characteristic distance (see also later discussions). A spatial separation of qubits may be a decisive factor when they interact directly with each other, for example, via dipole-dipole interactions, as is the case, e.g., for dipole-dipole interactions of optically trapped Rydberg atoms, see, e.g., https://doi.org/10.1088/0953-4075/49/20/202001. In other examples, a spatial distance between qubits may not be a relevant factor, or at least not only the relevant factor that determines the adjacency of qubits. For example, semiconductor qubits can be coupled with each other via a quantum bus to which these qubits are coupled, so that the qubit coupling can be adjusted by a magnetic flux control of these qubits and their spatial separation may not be a decisive factor. For example, when the qubit coupling exceeds a predetermined critical value such that a two-qubit gate may be realized based on these two qubits (without involving a third qubit) or these two qubits may form an entangled state, said qubits may be considered as adjacent qubits. In this case their spatial separation may not be a decisive factor. In some other examples, the qubit-qubit coupling of superconducting qubits may be adjusted by connecting them to an intermediate electrical coupling circuit, see, e.g., https://doi.org/10.1038/s41586-019-1666-5 .

The term "ancilla qubits" and "auxiliary ancilla qubits" refers to qubits that are used to control quantum computational operations and resulting unitary transformations on "system qubits". Thus, the unitary transformations controlled by the ancilla qubits are referred to as controlled unitary transformations in the present specification. The "ancilla qubits" may contain a predetermined information content (e.g., a known quantum state, such as an entangled state, to which they are initialized) and may transmit this information to auxiliary ancilla qubits. A number of "ancilla qubits" may be reinitialized to contain another predetermined information content, for instance, during quantum computations.

In the present specification, "transmitting the predetermined information content" between qubits within the same or different species of qubits should be broadly construed. In some cases, transmitting the predetermined information content between two adjacent qubits may include applying a unitary transformation to said qubits, e.g., using one or more two-qubit gates or, in some examples, one or more single- or multi-qubit gates in addition to said two-qubit gates. It should be noted that "transmitting the predetermined information content" between two adjacent qubits involving unitary transformations may include a direct (physical) interaction between these qubits and/or interaction of these qubits via, e.g., a hosting lattice/quantum bus (in the sense described above). In some examples of the present specification, "the predetermined information content" may be transmitted between distant qubits via respective unitary transformations applied between adjacent qubits arranged between said distant qubits (see discussions further below for more details). In the present techniques, "transmitting the predetermined information content" between two adjacent qubits may include controlling quantum computational operations carried out on a qubit to which the "the predetermined information content" is transmitted by a qubit from which "the predetermined information content" is transmitted. In some cases, "the predetermined information content" may be transmitted, for example, one or more times during the course of quantum computational operations (e.g., at different moments of time) to provide said control, see also discussions further below. Furthermore, when "the predetermined information content" can be transmitted from one qubit to another adjacent qubit in the aforementioned sense, the qubit to which "the predetermined information content" is transmitted may be referred to as being configured to receive "the predetermined information content".

The term "a chain of qubits" as used herein should be broadly construed in the present disclosure referring to a one-dimensional (1D) spatial arrangement of qubits of the same species on a plane of a 2D lattice (e.g., along a 1D curve or a straight line). In some cases, a species of qubits can comprise one or more connected chains of qubits extending in one or more directions. In addition or alternatively, a species of qubits can comprise one or more disconnected chains of qubits extending in one or more directions that are interrupted, e.g., by one or more chains of another species of qubits.

**Description of the Figures**

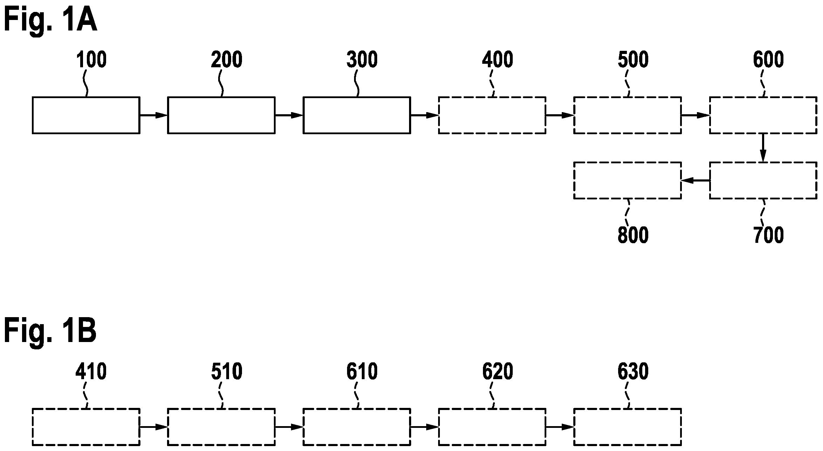

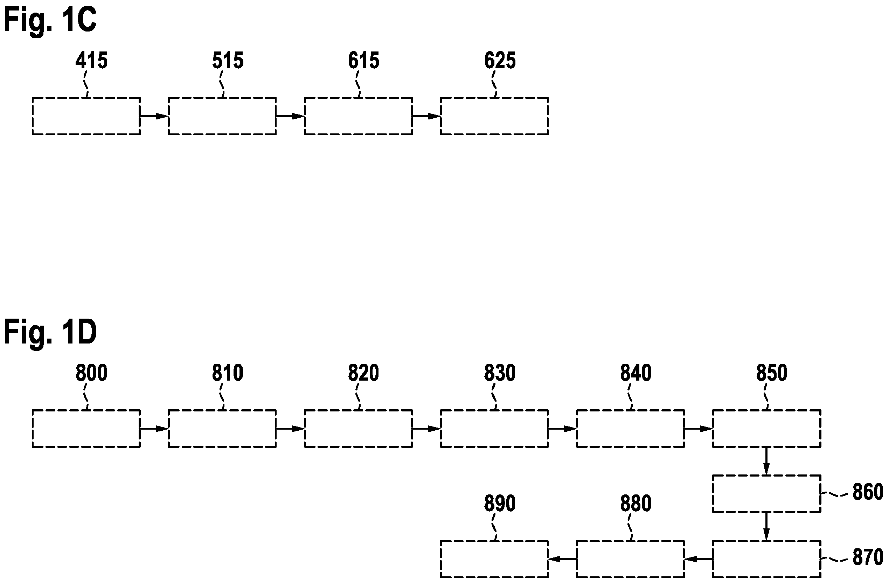

Fig. **1a** is a flow diagram illustrating a method for controlling a quantum computing system according to the first aspect. **Figs. 1b** to **1d** are flow diagrams showing further possible method steps according to the first aspect.

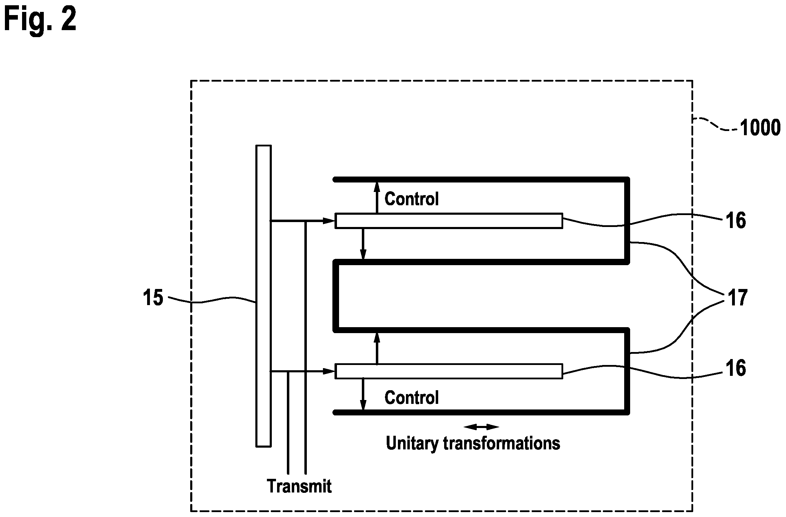

Fig. 2 shows schematically a possible quantum computing system 1000 of the present techniques with qubits arranged on a 2D lattice. Unitary transformations are performed on system qubits 17 arranged in serpentines under control of respective auxiliary ancilla qubits, which form horizontal chains adjacent to the serpentines of the system qubits. The predetermined information content of the ancilla qubits 15 (e.g., their quantum state) is transmitted (i.e., duplicated) into the auxiliary ancilla qubits 16 as shown in this figure. Ancilla qubits 15 form a vertical chain.

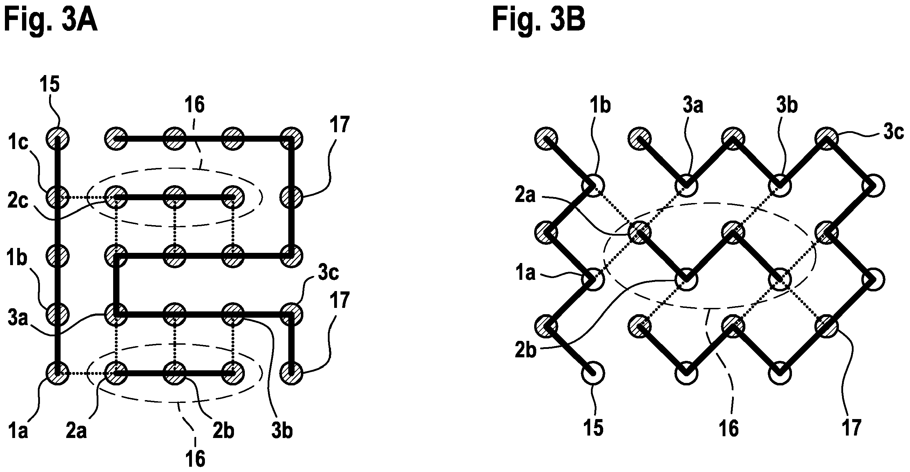

**Figs. 3a** and **3b** present schematically two possible topologies with the arrangement of qubits according to present techniques: **(a)** a 2D lattice comprising a plurality of square cells with four qubits at the vertices of a square cell. Otherwise, the arrangement of qubits is similar to that displayed in Fig. **2. (b)** a 2D lattice comprising a plurality of square cells rotated by 45° with respect to those shown in **(a)** (around the axis perpendicular to a sheet surface). The representations of qubits by filled and empty circles are used to facilitate the recognition of square cells. Ancilla qubits 15 form a vertical straight **(a)** or zigzag **(b)** chain, while two straight chains **(a)** or a zigzag **(b)** chain of the auxiliary ancilla qubits 16 are arranged in the horizontal direction. The system qubits represent straight **(a)** or zigzag **(b)** chains arranged in both the horizontal and vertical directions. Dashed lines in **(a)** and **(b)** indicate possible transmitting the predetermined information content between respective adjacent qubits.

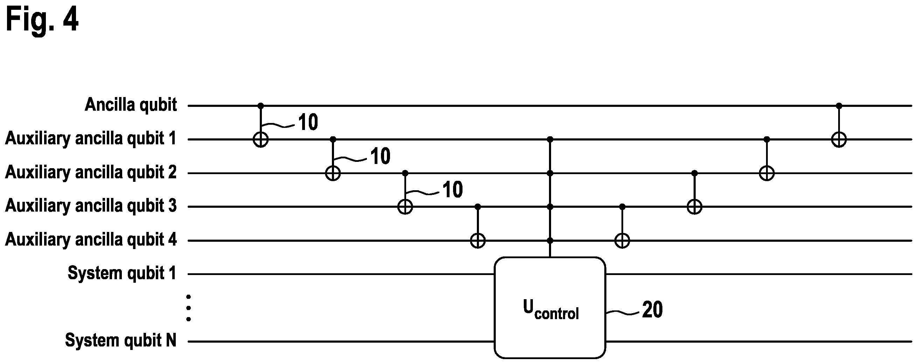

Fig. **4** shows an example of quantum circuit for transmitting the predetermined information content of an ancilla qubit to respective auxiliary ancilla qubits via a sequence of controlled NOT (CNOT) operations 10. The quantum computational operations (e.g., unitary transformations) on the system qubits, $U_{control}$; 20, are carried out under control of the auxiliary ancilla qubits, which transmit the predetermined information content to the respective system qubits (this process is schematically indicated by a vertical line entering a block "$U_{control}$" on this figure). The quantum state of these auxiliary ancilla qubits is reset after accomplishing the controlled unitary transformations by means of the sequence of CNOT operations.

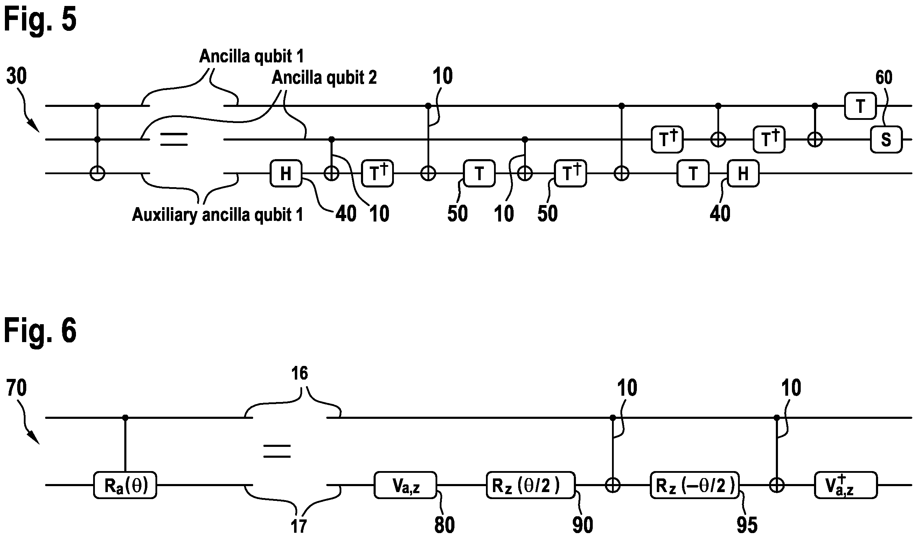

**Fig. 5** shows another possible way of controlling a unitary transformation on system qubits (not shown on this figure) by using two ancilla qubits. Here, the predetermined information content of both ancilla qubits is taken into account being transmitted to a respective auxiliary ancilla qubit. As an example, this operation is performed by a Toffoli gate 30 represented by a quantum circuit comprising two Hadamard gates, H; 40, one phase gate, $S$; 60, six CNOT gates 10, and seven $\pi/8$-gates, T; 50, arranged as depicted in this figure. The operator † in the figure stays for a Hermitian conjugate of the corresponding operator T, e.g., a matrix representing the $\pi/8$-gate. **Fig. 6** shows schematically a quantum circuit for controlling general rotations, $R_a(\theta)$; 70, around an axis $\alpha$ performed on a system qubit 17. In this embodiment, such general rotation is carried out by a quantum circuit configured to perform a rotation transformation, $R_z(\theta/2)$; 90, around a rotation axis z of the respective qubit, a respective inverse rotation transformation, $R_z(-\theta/2)$; 95, two corresponding basis rotation transformations, $V_{a,z}$; 80, and two CNOT operations 10.

## Detailed Description

First, some general aspects related to control of a quantum computing system will be discussed before some possible implementations are explained. An overview over the first aspect of the present disclosure related to control of a quantum computing system will be given in connection with flow charts shown in **Figs. 1a-1d.** Then, exemplary topologies with arranged qubits on the quantum computing system according to the present techniques are displayed in **Figs. 2,** 3a and **3b.** Next, two examples of quantum circuits for transmitting the predetermined information content from ancilla qubits to auxiliary ancilla qubits are presented in **Figs. 4** and **5.** Last, an exemplary quantum circuit for controlling general rotations on a system qubit is demonstrated in **Fig. 6.**

**Figs. 1a-1d** disclose and propose a method for configuring a quantum computing system in accordance with the first aspect of the present disclosure. The quantum computing system of the present disclosure comprises a plurality of qubits arranged on a two-dimensional (2D) lattice (see, e.g., **Figs. 2,** 3a and **3b,** where various embodiments of 2D lattices are schematically illustrated, and further discussions). The method steps of the corresponding independent claim are summarized inside boxes drawn by solid lines in **Figs. 1a-1d,** while the method steps of dependent claims are shown inside boxes depicted by dashed lines.

The present techniques for configuring a quantum computing system include receiving a selection 100 of first one or more qubits 15; 1a-1c of the plurality of qubits, wherein the first one or more qubits are configured to be initialized to a predetermined information content. Qubits of the first one or more qubits can be aimed at controlling quantum computational operations (e.g., unitary transformations on one or more qubits) and may be referred to as ancilla qubits in the present specification. In the examples of 2D lattices shown in **Figs. 2,** 3a and **3b,** ancilla qubits 1a-1c are aligned along a straight line (as depicted in **Figs. 2, 3a** with five ancilla qubits in **Fig. 3a)** and a zigzag line in the vertical direction (as depicted in **Fig. 3b** with five ancilla qubits therein). In some examples, the first one or more qubits may contain two or more, three or more, five or more, or ten or more qubits (i.e., ancilla qubits as defined above), which comprise the predetermined information content. In the present specification the predetermined information content of an ancilla qubit can include information about its quantum state, e.g., a known quantum state in which said ancilla qubit has been prepared (e.g., prior or during some of the quantum computational operations), as discussed in more details below.

The next step of the present techniques can include receiving a selection 200 of a second plurality of qubits 16; 2a-2c of the plurality of qubits, wherein one or more qubits 2a; 2c of the second plurality of qubits are adjacent to respective at least one qubit 1a; 1c of the first one or more qubits and are configured to receive the predetermined information content from the respective at least one qubit of the first one or more qubits (for example, by means of quantum computing circuits disclosed in connection with **Figs. 4** and **5,** which are discussed in detail below). In some examples, the second plurality of qubits may be required to transmit the predetermined information content from ancilla qubits (e.g., their quantum state) to those qubits (for example, to non-adjacent system qubits with respect to the ancilla qubits) on which quantum computational operations has to be performed under control of said ancilla qubits, as elucidated in further detail below. Therefore, qubits of the second plurality of qubits may also be referred to as auxiliary ancilla qubits throughout this specification. In the examples of 2D lattices shown in **Figs. 2** and **3a,** six auxiliary ancilla qubits 2a-2c are members of two disconnected chains aligned along two corresponding horizontal lines, while four auxiliary ancilla qubits 2a; 2b in the embodiment of **Fig. 3b** are aligned along a zigzag line in the horizontal direction. In some examples, the second plurality of qubits (i.e., auxiliary ancilla qubits according to the above definition) may contain two or more, three or more, five or more, or ten or more qubits. As is also seen from **Figs. 3a** and **3b,** the auxiliary ancilla qubit 2a is the nearest-neighbor with respect to the ancilla qubit 1a, such that the auxiliary ancilla qubit 2a can be classified as a qubit being adjacent with respect to the ancilla qubit 1a according to the definitions further above. For the same reason, the auxiliary ancilla qubit 2c of **Fig. 3a** can be considered to be adjacent to the ancilla qubit 1c. Thus, in some examples, the auxiliary ancilla qubit 2a and 2c mentioned above can be configured to receive the predetermined information content from, respectively, the ancilla qubits 1a and 1c. On the other hand, the auxiliary ancilla qubit 2b of **Fig. 3a** has no adjacent ancilla qubit, since there is another auxiliary ancilla qubit 2a between said auxiliary ancilla qubit 2b and a chain of ancilla qubits. Similarly, in some cases, no adjacent ancilla qubit can be associated with the auxiliary ancilla qubit 2b of **Fig. 3b,** because a distance from said auxiliary ancilla qubit 2b to the nearest ancilla qubit 1a exceeds the predetermined characteristic distance, which is, for example, a size of the square cell in this example. In other cases, in accordance with the definitions above, the qubit-qubit coupling can be increased (e.g., via magnetic flux control or additional electrical circuit in the context of superconducting qubits), so that two qubits may be considered adjacent to each other in some examples despite their spatial separation. Thus, in this case, the qubits 1a and 2b can be classified as adjacent qubits.

The next step of the method can include receiving a selection 300 of a third plurality of qubits 17; 3a-3c of the plurality of qubits configured to perform a plurality of quantum computational operations. In this case, a quantum computational operation of the plurality of quantum computational operations on each qubit of the third plurality of qubits (e.g., a unitary transformation on a respective qubit) can be controlled using the predetermined information content from the respective at least one qubit of the first one or more qubits (for example, using a quantum state of respective one or two ancilla qubits, as disclosed in connection with the embodiments of **Figs. 4** and **5** below). Qubits of the third plurality of qubits at which quantum computational operations are controlled may be referred to as system qubits in the present disclosure. In the examples of 2D lattices shown in **Figs. 2** and **3a,** fourteen system qubits 3a; 3b; 3c are members of a serpentine adjacent to the second plurality of qubits (i.e. the auxiliary ancilla qubits), while thirteen system qubits 3a; 3b; 3c of **Fig. 3b** are members of a serpentine adjacent to the second plurality of qubits. In some examples, the third plurality of qubits may contain two or more, three or more, five or more, or ten or more qubits (i.e., system qubits according to the above definition). In some cases, a total number of qubits in the second plurality of qubits (i.e., auxiliary ancilla qubits), M, can be less than a total number of qubits in the third plurality of qubits $N$, $M < N$. For example, a corresponding ratio $M/N$ may be a value of 9/10 or less, ½ or less, ¼ or less, 1/10 or less.

In the techniques of the present disclosure, each qubit 2a from a number of qubits of the second plurality of qubits (i.e., auxiliary ancilla qubits) is adjacent to at least one qubit 3a of the third plurality of qubits (i.e., system qubits). In the examples of **Figs. 3a** and **3b,** possible adjacent auxiliary ancilla qubits and system qubits are designated by dashed lines. In the example of **Fig. 3a,** each auxiliary ancilla qubit is adjacent to a respective system qubit, whereas in the example of **Fig. 3b,** auxiliary ancilla qubits are present that are adjacent to two or three system qubits. In some examples, each qubit of the second plurality of qubits can be adjacent to at least one qubit of the third plurality of qubits (as in the embodiments illustrated in **Figs. 3a** and **3b).** In other examples, one or more qubits from the second plurality of qubits may not have an adjacent qubit from the third plurality of qubits. For example, one or more such auxiliary ancilla qubits can be disposed between respective auxiliary ancilla qubits that have at least one qubit of the third plurality of qubits adjacent thereto (e.g., to transmit the predetermined information content between them). In the present techniques, each qubit 3a of the third plurality of qubits (i.e., system qubits) that is adjacent to a respective qubit 2a from the number of qubits of the second plurality of qubits (i.e., auxiliary ancilla qubits) is configured to receive the predetermined information content from said respective qubit (for example, by means of a quantum computing circuit disclosed in connection with **Fig. 6,** see discussions below). In other words, in this way, the predetermined information content of one or more ancilla qubits (e.g., their quantum state) can be transmitted to system qubits via corresponding auxiliary ancilla qubits to enable control of quantum computational operations on said system qubits.

In the present techniques, the first one or more qubits, the second and third pluralities of qubits can be selected on a design phase of the quantum computing system. In addition or alternatively, the first one or more qubits, the second and third pluralities of qubits can be selected, for example, automatically (e.g., by a program/algorithm depending on a computational task to be performed). In other examples, the first one or more qubits, the second and third pluralities of qubits can be selected by a user (e.g., via a suitable user interface). In the techniques of the present disclosure, the receiving selection steps 100, 200, 300 of the first one or more qubits, and the second and third pluralities of qubits are not particularly limited and in some cases qubits may be redistributed among these first one or more qubits and two pluralities of qubits (e.g., by a user or automatically as mentioned above): For example, for one quantum computational task (see discussions below for more details), a number of qubits from the plurality of qubits of the quantum computing system can be selected as members of the first one or more qubits, while for another quantum computational task, one or more qubits (e.g., all qubits) from said number of qubits may be selected to belong to the second and/or third plurality of qubits (for example, to carry out quantum computational tasks more efficiently). In other examples, similar considerations apply to a number of qubits from the second and/or third plurality of qubits.

The next step of the method can include controlling a quantum computing system after carrying out the receiving selection steps 100, 200 and 300 (related to configuring the quantum computing system). In the present techniques, controlling the quantum computing system can include initializing 400 the respective at least one qubit of the first one or more qubits (i.e., ancilla qubits) to the predetermined information content (e.g., to a known quantum state such an entangled state, as discussed in more detail below). In the next step, the method can involve transmitting 500 the predetermined information content of the respective at least one qubit (e.g., one qubit or two or more qubits) of the first one or more qubits to the one or more qubits of the second plurality of qubits adjacent to the respective at least one qubit of the first one or more qubits. In other words and in agreement with the discussions above, the predetermined information content of the respective one or more ancilla qubits (e.g., their quantum state) can be transmitted to the one or more adjacent auxiliary ancilla qubits (for example, by means of quantum computing circuits disclosed in connection with **Fig. 4** and **Fig. 5** further below). Returning to the example of **Fig. 3a** and **3b,** the predetermined information content of the ancilla qubits 1a and 1c can be transmitted to the respective adjacent auxiliary ancilla qubits 2a and 2c.

In the next step, the predetermined information content of the one or more qubits 2a; 2c of the second plurality of qubits (i.e., auxiliary ancilla qubits) can be transmitted 600 to respective other qubits 2b of the second plurality of qubits. In preferred examples, this step can be performed to transmit (or, in other words, deliver/propagate) the predetermined information content to remote auxiliary ancilla qubit for which no adjacent ancilla qubit is available (for example, by means of a quantum computing circuit disclosed in connection with **Fig. 4).** The respective other qubits 2b of the second plurality of qubits of the present techniques are configured to receive the predetermined information content from said one or more qubits 2a; 2c of the second plurality of qubits. For example, as mentioned above, no adjacent ancilla qubit exists with respect to the auxiliary ancilla qubit 2b of **Figs. 3a** and **3b.** In this case, the predetermined information content of the auxiliary ancilla qubit 2a received from the adjacent ancilla qubit 1a (in accordance with the above discussions) can be further transmitted to the auxiliary ancilla qubit 2b.

The techniques of the present disclosure can include transmitting 700 the predetermined information content of one or more qubits 2a of the number of qubits of the second plurality of qubits (i.e., auxiliary ancilla qubits) to respective adjacent one or more qubits 3a of the third plurality of qubits (i.e., system qubits). In other words, as disclosed in detail further below and in accordance with the definitions above, the predetermined information content of the auxiliary ancilla qubits transmitted to the respective adjacent system qubits can be used to provide controlled quantum computational operations on said system qubits. In some examples, the predetermined information content of one of the auxiliary ancilla qubits can be transmitted to the respective adjacent system qubit. For example, the predetermined information content of the auxiliary ancilla qubit 2a can be transmitted to the respective adjacent system qubit 3a shown in **Figs. 3a** and **3b** using one or more controlled NOT (CNOT) operations 10, e.g., as disclosed further below in connection with **Fig. 6.** In some cases, the predetermined information content of each qubit of the one or more qubits from the number of qubits of the second plurality of qubits can be transmitted to the respective adjacent qubit of the third plurality of qubits. This situation is schematically represented by dashed lines drawn between corresponding auxiliary ancilla qubits and system qubits in the embodiment of **Fig. 3a.** In some other cases, the predetermined information content of two or more, three or more, four or more qubits from the number of qubits of the second plurality of qubits can be transmitted to the respective adjacent qubit of the third plurality of qubits. In other examples, the predetermined information content of one of the auxiliary ancilla qubits can be transmitted to the respective two or more adjacent system qubits. In the example of **Fig. 3b,** the predetermined information content of the rightmost auxiliary ancilla qubit, enclosed in a dashed ellipse, can be transmitted to three different system qubits, as indicated by respective dashed lines. In some cases, the predetermined information content of one or more auxiliary ancilla qubits (e.g., each auxiliary ancilla qubit) can be transmitted to the respective two or more, three or more, four or more adjacent system qubits.

The next step of the method can include performing 800 a plurality of quantum computational operations on the one or more qubits 3a-3c of the third plurality of qubits (e.g., one or more unitary transformations performed on one or more respective system qubits). The plurality of quantum computational operations on said one or more qubits can be controlled using the predetermined information content transmitted to the one or more qubits of the third plurality of qubits. In other words, quantum computational operations on system qubits can be controlled using, for instance, the predetermined information content transmitted from respective one or more adjacent auxiliary ancilla qubits (e.g., using their quantum state) to said system qubits. In some examples, the predetermined information content may be transmitted one or more times from the respective one or more adjacent auxiliary ancilla qubits to said system qubits during the course of quantum computational operations to provide such control (see discussions further below and, for example, two CNOT operations mentioned above applied to the auxiliary ancilla qubit and system qubit shown in **Fig. 6).** In accordance with the above disclosure, the predetermined information content originates from the respective one or more ancilla qubits. In this way, the quantum computational operations of the present techniques performed on system qubits can be controlled by corresponding ancilla qubits (see also **Fig. 2,** where this control process is schematically illustrated). For example, quantum computational operations performed on system qubit 3a of **Figs. 3a** and **3b** can be controlled by the ancilla qubit 1a via the auxiliary ancilla qubit 2a in the sense described above.

In the present techniques, one qubit from the plurality of qubits on the 2D lattice can be considered to be adjacent to another qubit from the plurality of qubits if a distance from said one qubit to the other qubit is equal to or less than a predetermined characteristic distance (see also the definitions above). In some examples, the predetermined characteristic distance may be proportional to an average distance between qubits of the plurality of qubits arranged on the 2D lattice (e.g., between the first, second and third pluralities of qubits introduced above). In some cases, the proportionality coefficient between these quantities may be chosen to be 0.5 or less, 0.9 or less, 1.2 or less, 1.5 or less). In some cases, the predetermined characteristic distance can be equal to the average distance between qubits. These two alternatives may be preferred, for example, for the case where the 2D lattice comprises square cells, as in the embodiments shown in **Figs. 3a** and **3b.** In still other examples, when an average distance between qubits of the first one or more qubits is different from an average distance between qubits of the second and/or third plurality of qubits, a number of the predetermined characteristic distances can be taken to identify adjacent qubits. For example, the predetermined characteristic distances may be proportional or equal to respective average distances between qubits within the same or different pluralities of qubits. In some cases, values of the proportionality coefficient may be chosen similarly to the case of a single predetermined characteristic distance.

In alternative examples, adjacency between qubits of the plurality of qubits can be determined in a different way. In some examples, one or more qubits of the plurality of qubits arranged on the 2D lattice can have at least one respective nearest-neighbor qubit from one or more of the first, second and third pluralities of qubits. In this case, the at least one respective nearest-neighbor qubit may be considered as being adjacent to said one or more qubits. For example, the auxiliary ancilla qubit 2a of **Fig. 3a** (member of the second plurality of qubits) has a nearest member auxiliary ancilla qubit 2b (another member of the second plurality of qubits), a nearest member ancilla qubit 1a (member of the first one or more qubits) and a nearest member system qubit 3a (member of the third plurality of qubits). In some cases, each qubit of the plurality of qubits arranged on the 2D lattice can have at least one respective nearest-neighbor qubit from one or more of the first, second and third pluralities of qubits, wherein the at least one respective nearest-neighbor qubit may be considered as being adjacent to said qubit. In still other examples, the adjacency between qubits of the plurality of qubits can determined based on both the one or more predetermined characteristic distances between qubits defined above and presence of respective nearest-neighbor qubits.

In the techniques of the present disclosure the first, second and third plurality of qubits can form a corresponding number of chains on the 2D lattice. In some cases, the first one or more qubits (i.e., ancilla qubits) can extend in a first direction (for example, in the vertical direction as in **Fig. 3a**) comprising one or more chains of qubits. The second plurality of qubits of the present techniques (i.e., auxiliary ancilla qubits) can extend in a second direction different from the first direction (for example, in the horizontal direction as in **Fig. 3a**). In some examples, the second plurality of qubits can comprise two or more disconnected chains of qubits (e.g., two chains of auxiliary ancilla qubits are shown in **Fig. 3a**). In some cases, the third plurality of qubits (i.e., system qubits) can comprise multiple connected chains of qubits, wherein each chain of the multiple connected chains of the third plurality of qubits extends in one of the first and second directions (e.g., in the horizontal and vertical directions as shown in **Fig. 3a** and **3b**). In some examples, one or more chains (e.g., each chain) from the multiple connected chains of the third plurality of qubits extending in the second direction can be connected to a corresponding chain from the multiple connected chains of qubits extending in the first direction. It should be noted that the extension of the first, second and third pluralities of qubits in the first and/or second directions should be broadly construed in the present disclosure: In some examples, a shape of the corresponding chain of qubits may form a one-dimensional (1D) curve on a plane of the 2D lattice that extends in the respective direction.

In one topology of the present techniques with qubits arranged on the 2D lattice, the first one or more qubits can form a chain aligned in a straight line the first direction (e.g., a vertical chain of the ancilla qubits of **Fig. 3a**). Furthermore, each chain of the two or more disconnected chains of the second plurality of qubits can be aligned in a respective straight line in the second direction (e.g., two horizontal disconnected chains of auxiliary ancilla qubits of **Fig. 3a**). In some cases, each chain of the multiple connected chains of the third plurality of qubits can be aligned in a respective straight line in one of the first and second directions (e.g., two vertical chains of the system qubits are correspondingly connected to three horizontal chains of system qubits of **Fig. 3a**). In some examples, the multiple connected chains can be arranged in serpentines adjacent to the second plurality of qubits that extend in the first direction (for instance, a serpentine of the system qubits extends in the vertical direction as shown in **Fig. 3a**). In some cases, a plurality of chains from the multiple connected chains aligned in the second direction is interrupted in every second chain by a corresponding chain from the two or more disconnected chains of the second plurality of qubits (see, e.g.,

**Fig. 3a,** where two horizontal chains from the serpentine of the system qubits are interrupted by two horizontal disconnected chains of auxiliary ancilla qubits).

In an alternative topology of the present techniques, the first one or more qubits form a chain aligned in a zigzag line in the first direction (e.g., a zigzag chain of ancilla qubits as shown in **Fig. 3b**). Furthermore, each chain of the two or more disconnected chains of the second plurality of qubits can be aligned in a respective zigzag line in the second direction (see, e.g., a zigzag horizontal chain of auxiliary ancilla qubits displayed in **Fig. 3b**). In some cases, each chain of the multiple connected chains of the third plurality of qubits can be aligned in a respective zigzag line in one of the first and second directions (e.g., one vertical zigzag chain of system qubits is correspondingly connected to two horizontal zigzag chains of system qubits in **Fig. 3b**). In some examples, similar to the embodiment of **Fig. 3a,** the multiple connected chains can be arranged in serpentines adjacent to the second plurality of qubits that extend in the first direction (for instance, a serpentine of the system qubits extends in the vertical direction as shown in **Fig. 3b**). In some cases, a plurality of chains from the multiple connected chains aligned in the second direction is interrupted in every second chain by a corresponding chain from the two or more disconnected chains of the second plurality of qubits (see, e.g., **Fig. 3b,** where two zigzag horizontal chains from the serpentine of the system qubits are interrupted by a zigzag horizontal chain of auxiliary ancilla qubits).

In some examples of the present disclosure, each chain of the two or more disconnected chains of the second plurality of qubits (i.e., auxiliary ancilla qubits) can comprise a single qubit adjacent to a respective qubit of the first one or more qubits (i.e., ancilla qubits), wherein said single qubit is spaced apart from the respective qubit by a first predetermined distance. Returning to the example of **Figs. 3a** and **3b,** two auxiliary ancilla qubits 2a and 2c are adjacent, respectively, to the ancilla qubits 1a and 1c and are spaced from them by a distance equal to a distance between two nearest neighbor auxiliary ancilla qubits (e.g., the distance between two nearest neighbor auxiliary ancilla qubits can be the same for all auxiliary ancilla qubits). In some examples, the first predetermined distance can be proportional to said distance between two nearest neighbor auxiliary ancilla qubits (e.g., with the proportionality coefficient between these quantities equal to 2,0 or less, 1,0 or less, or 0,5 or less). In addition, each chain of the two or more disconnected chains of the second plurality of qubits can be separated from a respective subsequent chain of the two or more disconnected chains of qubits by a second predetermined distance (e.g., the second predetermined distance corresponds to a distance between two horizontal chains of auxiliary ancilla qubits enclosed in two dashed ellipses shown in **Fig. 3a**). In some examples, a pair of subsequent chains from the multiple connected chains of the third plurality of qubits aligned in the second direction can be separated by a third predetermined distance if said pair of chains is uninterrupted (see, e.g., two uninterrupted horizontal chains of systems qubits in **Fig. 3a),** or otherwise said pair of subsequent chain can be separated by a fourth predetermined distance (see, e.g., two interrupted horizontal chains of systems qubits in **Fig. 3a**). In some examples, the first and third predetermined distances may be equal. In addition or alternatively, the second predetermined distance may be three times larger as the first predetermined distance. Moreover, in addition or alternatively, the fourth predetermined distance may be twice as large as the first predetermined distance.

In one example of the present techniques, the 2D lattice can be a rectangular lattice. In other examples, the 2D lattice can be a square lattice. In still other examples, 2D lattice can have any other 2D shape (e.g., polyform, tetragon, pentagon, hexagon, parallelogram, circle or triangle). In some examples, multiple qubits from the plurality of qubits arranged in the 2D lattice can be equally spaced. For example, all qubits from one or more of the first, second and third pluralities of qubits can be equally spaced. In some cases, all qubits in the 2D lattice can be equally spaced. Furthermore, in some cases, the 2D lattice (e.g., the rectangular or square lattice) can comprise a plurality of square cells with four qubits at the vertices of a square cell, wherein each qubit from said four qubits is a qubit from one of the first, second and third pluralities of qubits. In the qubit topology of **Fig. 3a,** there are square cells with different combinations of the ancilla-, auxiliary ancilla- and system qubits. For example, one square cell can comprise only system qubits, while the other may comprise qubits of all listed types. A similar situation is seen from the other qubit topology shown in **Fig. 3b,** whose 2D lattice comprises a plurality of square cells rotated by 45° with respect to those shown in **Fig. 3a** (around the axis perpendicular to a sheet surface). In addition or alternatively, the 2D lattice can comprise a plurality of quadrilateral (e.g., rectangular) cells with four qubits at the vertices of a quadrilateral (e.g., rectangular) cell, wherein each qubit from said four qubits is a qubit from one of the first, second and third pluralities of qubits. In addition or alternatively, the 2D lattice can comprise a plurality of triangular cells with three qubits at the vertices of a triangular cell, wherein each qubit from said three qubits is a qubit from one of the first, second and third pluralities of qubits.

In the techniques of the present disclosure, the predetermined information content of the first one or more qubits (i.e. ancilla qubits) can comprise information regarding a quantum state, $|\psi\rangle$, of said one or more qubits. In some cases, the quantum state can be a single-qubit quantum state (e.g. the single-qubit quantum state of one of the ancilla qubits), when the predetermined information content relates to a single qubit of the first one or more qubits. In one example, the quantum state of the single qubit of the first one or more qubits can be a zeroth quantum state corresponding to, e.g., a ground state of said qubit (i.e., a state with the lowest energy, or, in other words, an unexcited state). This state may be represented, e.g., by a ket-vector $|0\rangle$ in the bra-ket notations known to those skilled in the art. In other examples, the quantum state of the single qubit of the first one or more qubits can be a first quantum state corresponding to, e.g., a first excited state of said qubit (that is, the excited state closest in energy to the ground state). This state may be represented, in turn, by a ket-vector $|1\rangle$. In still other examples, the quantum state of the single qubit of the first one or more qubits can be a linear superposition of the zeroth and first quantum states. In this case the quantum state of the ancilla qubit can be written, for instance, as $|\psi\rangle = \alpha|0\rangle + \beta|1\rangle$, where $\alpha$ and $\beta$ are some nonzero amplitudes. In other cases, the quantum state $|\psi\rangle$ of said one or more qubits can be a multi-qubit quantum state, when the predetermined information content relates to at least two qubits of the first one or more qubits. In some cases, the multi-qubit quantum state can be a tensor product state (also referred to as a separable quantum state) involving the tensor product of each single-qubit quantum state of the at least two qubits of the first one or more qubits, $|\psi\rangle = |\varphi\rangle_1 \otimes |\varphi\rangle_2 \ldots \otimes |\varphi\rangle_L$, where L is the number said qubits and $\otimes$ denotes the tensor product. For example, the tensor product state of the two ancilla qubits, whose quantum states are linear superpositions of the zeroth and first quantum states, $|\varphi\rangle_1 = \alpha_1|0\rangle + \beta_1|1\rangle$ and $|\varphi\rangle_2 = \alpha_2|0\rangle + \beta_2|1\rangle$, can be written as $|\psi\rangle = \alpha_1\alpha_2|00\rangle + \alpha_1\beta_2|01\rangle + \alpha_2\beta_1|10\rangle + \beta_1\beta_2|11\rangle$, $+ \beta_1\beta_2|11\rangle$, where $\alpha_i$ and $\beta_i$ ($i = 1,2$) are corresponding amplitudes. In other cases, the multi-qubit quantum state can be an entangled state $|\psi\rangle$, which is a quantum state that cannot be represented in terms of the tensor product states, since the quantum state of each of the at least two qubits of the first one or more qubits cannot be treated independently of the quantum state of the remainder of qubits from said at least two qubits. In some cases, two ancilla qubits can be prepared in one of the Bell states, which are examples of such entangled states that can be written as: $|\psi\rangle =$

$$(|00\rangle \pm |11\rangle)/\sqrt{2} \text{ and } |\psi\rangle = (|01\rangle \pm |10\rangle)/\sqrt{2}$$

(four different Bell states exist for two ancilla qubits).

The techniques of the present disclosure can further comprise initializing 410 the respective at least one qubit of the first one or more qubits (i.e. ancilla qubits) to the quantum state (e.g., to the multi-qubit or single-qubit quantum state disclosed above). For example, such initialization can be performed by respective quantum circuits comprising one and/or multi-qubit gates (e.g., two- and/or three-qubit gates) to prepare one or more ancilla qubits in the respective quantum state. In the next step, the method can involve transmitting 510 the information regarding the quantum state of one qubit of the respective at least one qubit of the first one or more qubits from said one qubit to a single qubit of a corresponding chain of the two or more disconnected chains of the second plurality of qubits, wherein said single qubit is adjacent to the one qubit of the respective at least one qubit of the first one or more qubits. For example, the information regarding the quantum state of ancilla qubit 1a, which in some cases may include information about other ancilla qubits from the chain of ancilla qubits (e.g., in the case of entangled states introduced above), can be transmitted to the adjacent auxiliary ancilla qubit 2a, see **Figs. 3a** and **3b**. The information regarding the quantum state of ancilla qubit 1c from **Fig. 3a** can, for example, be transmitted to the adjacent auxiliary ancilla qubit 2c in a similar manner. Thus, in some examples, the information regarding the quantum state of the one qubit of the respective at least one qubit of the first one or more qubits can be transmitted from said one qubit of the respective qubits to a single qubit of a number of corresponding chains (e.g., of each corresponding chain) of the two or more disconnected chains of the second plurality of qubits, wherein said single qubit is adjacent to the one qubit of the respective at least one qubit of the first one or more qubits.

The next step of the present techniques can include transmitting 610 the information regarding the quantum state from the single qubit of the corresponding chain of the two or more disconnected chains of the second plurality of qubits to a respective adjacent qubit of said chain. For example, the auxiliary ancilla qubit 2a of **Figs. 3a** and **3b** can transmit said information regarding the quantum state, which is received from the adjacent ancilla qubit 1a in agreement with the above discussions, to the auxiliary ancilla qubit 2b being adjacent with respect to the auxiliary ancilla qubit 2a. The method of the first aspect can further include iterative transmitting 620 the information from the respective adjacent qubit of said chain to a next qubit of the chain being adjacent with respect to the respective adjacent qubit (for example, the auxiliary ancilla qubit 2b in **Fig. 3a** may transmit the information to an adjacent qubit that is on the right side with respect to it). In this case, the next qubit of the chain can be considered to be the respective adjacent qubit for a next iteration. In some examples, the iterative transmitting 620 the information within the corresponding chain of the two or more disconnected chains of the second plurality of qubits can be carried out until the information is transmitted to a number of qubits (e.g., to each qubit) within the corresponding chain of the two or more disconnected chains. In other words, the information regarding the quantum state of an ancilla qubit (e.g., the ancilla qubit 1a of **Figs. 3a** and **3b)** can be transmitted at first to a respective adjacent auxiliary ancilla qubit (e.g., to the auxiliary ancilla qubit 2a of **Figs. 3a** and **3b)** and then to other (distant) auxiliary ancilla qubits of this chain (e.g., at first to the auxiliary ancilla qubit 2b and then to other auxiliary ancilla qubits located to the right of this qubit 2b within the same chain).

In one embodiment, the present techniques can comprise initializing one or more qubits within the corresponding chain of the two or more disconnected chains of the second plurality of qubits to the zeroth quantum state $|0\rangle$. Thus, in this example, auxiliary ancilla qubits of the corresponding chain are initialized to their ground state introduced above. In the next step, a number of successive controlled NOT (CNOT) operations 10 between respective adjacent qubits of the two or more disconnected chains can be used to carry out the previously discussed transmitting steps 510, 610 and 620, as illustrated in **Fig. 4.** Specifically, the function of each CNOT operation of the quantum circuit in **Fig. 4** (see four CNOT gates 10 before a block $U_{control}$ denoting subsequent controlled quantum computational operations, for example, controlled unitary transformations, performed on the system qubits discussed later on) is to negate a subsequent qubit (right after a respective symbol denoted by ⊕), if a previous qubit has a quantum state $|1\rangle$ (right before a respective symbol denoted by •) or, otherwise, when the previous qubit has a quantum state $|0\rangle$, keeping a quantum state of the subsequent qubit unchanged. In other words, a quantum state of the auxiliary ancilla qubits 1 to 4 shown in **Fig. 4** remains in the initial zeroth quantum state $|0\rangle$ after applying these successive CNOT operations, if the ancilla qubit shown in this figure was initialized to the zeroth quantum state $|0\rangle$. Otherwise, if the quantum state of the ancilla qubit was initialized to the first quantum state $|1\rangle$, the quantum state of the auxiliary ancilla qubits 1 to 4 shown in **Fig. 4** is flipped from the initial zeroth quantum state $|0\rangle$ to the first quantum state $|1\rangle$. Finally, if the ancilla qubit shown in **Fig. 4** is prepared in a linear superposition of the zeroth and first quantum states, $|\varphi\rangle = \alpha|0\rangle + \beta|1\rangle$, or the quantum state of said ancilla qubit is constituent of an entangled state involving other ancilla qubits (not shown in this figure), then the information regarding the quantum state of the ancilla qubit of **Fig. 4** can also be transmitted to the auxiliary ancilla qubits 1 to 4.

In some examples of the present techniques, one or more CNOT operations from the number of successive CNOT operations introduced above can be carried out by respective quantum CNOT gates. In addition or alternatively, one or more CNOT operations may comprise a respective decomposition of said one or more CNOT operations into corresponding quantum operations carried out by native hardware gates (i.e., gates available at a specific architecture of a quantum computer and/or a qubit topology).

The techniques of the present disclosure can further comprise resetting 630 the respective one or more qubits of the second plurality of qubits (i.e., auxiliary ancilla qubits) to the zeroth quantum state $|0\rangle$ after performing one or more quantum computational operations of the plurality of quantum computational operations on the one or more qubits 3a-3c of the third plurality of qubits (e.g., one or more unitary transformations performed on the system qubits) to which the respective one or more qubits of the second plurality of qubits transmitted the predetermined information content. In some cases, resetting the auxiliary ancilla qubits to the zeroth quantum state after accomplishing the first portion of quantum computational operations on the system qubits may be necessary to enable the control of a subsequent portion of quantum computational operations on these system qubits by respective ancilla qubits. For instance, the predetermined information content of said respective ancilla qubits can be changed (e.g., they can be initialized to another quantum state) after the first portion of quantum computational operations has been performed. In this case, the auxiliary ancilla qubits can be reset to the zeroth state prior to receiving the information regarding the quantum state of the respective ancilla qubits to avoid possible interference/mixture with the previous quantum state of the auxiliary ancilla qubits. In some examples, the resetting step 630 can include applying a number of successive CNOT operations 10 between respective adjacent qubits of the two or more disconnected chains. In one non-exhaustive embodiment, the same number of successive CNOT operations 10, but in reverse order, can be applied to the auxiliary ancilla qubits as previously used for the transmitting steps 510, 610 and 620, see four CNOT gates 10 in **Fig. 4** applied to the auxiliary ancilla qubits 4 to 1 after the block $U_{control}$.

In addition or alternatively, the method can comprise initializing 415 respective at least two qubits of the first one or more qubits to the quantum state similar to the previously discussed embodiment. For example, such initialization can be performed by respective quantum circuits comprising one and/or multi-qubit gates (e.g., two- and/or three-qubit gates) to prepare one or more ancilla qubits in the respective quantum state. In the next step, the method can involve transmitting 515 the information regarding a quantum state of the respective at least two qubits of the first one or more qubits (e.g., the multi-qubit quantum state of at least two ancilla qubits) from said qubits to a single qubit of a corresponding chain of the two or more disconnected chains of the second plurality of qubits (i.e. to a single auxiliary ancilla qubit), wherein said single qubit is adjacent to one or more qubits of the respective at least two qubits of the first one or more qubits. In some cases, the single qubit of the corresponding chain (i.e., a single auxiliary ancilla qubit) can be adjacent to the respective at least two qubits of the first one or more qubits (e.g., to all qubits of the respective at least two qubits). For example, the information regarding the quantum state of two ancilla qubits 1a and 1b of **Fig. 3b** (e.g., an entangled state involving only these two qubits or these qubits together with a number of other ancilla qubits of this chain), can be transmitted to the adjacent auxiliary ancilla qubit 2a, see Fig. 3b. Thus, in some examples, the information regarding the quantum state of the respective at least two qubits from said qubits can be transmitted to a single qubit of a number of corresponding chains (e.g., of each corresponding chain) of the two or more disconnected chains of the second plurality of qubits. In the example of **Fig. 3b,** said single qubit (i.e., the auxiliary ancilla qubit 2a) is adjacent to the respective at least two qubits of the first one or more qubits (i.e., to two ancilla qubits 1a and 1b of Fig. 3b). In still other examples, the single qubit of the corresponding chain can be adjacent to more than two qubits, but less than to a total number of qubits of the respective at least two qubits of the first one or more qubits.

In the present techniques, transmitting 515 the information regarding the quantum state of the respective at least two qubits of the first one or more qubits may include transmitting the information regarding a quantum state of a qubit of the respective at least two qubits of the first one or more qubits that is not adjacent to said single qubit to a qubit of the respective at least two qubits of the first one or more qubits that is adjacent to said single qubit of the corresponding chain of the two or more disconnected chains of the second plurality of qubits. For example, said non-adjacent and adjacent qubits can swap the information regarding their quantum state via a single SWAP operation (i.e., an operation that swaps the information of these two qubits or a decomposition of this operation into native hardware gates, see further discussions for more details), if the qubit that is adjacent to the single qubit and the qubit that is non-adjacent to the single qubit are adjacent with respect to each other. In other cases, if said non-adjacent and adjacent qubits with respect to the single qubit are not adjacent with respect to each other, swapping the information between them may include iterative applying a number of subsequent SWAP operations between adjacent qubits of the respective at least two qubits of the first one or more qubits that are arranged between said non-adjacent and adjacent qubits. Specifically, iterative applying the number of subsequent SWAP operations can be carried out until the information regarding the quantum state of the non-adjacent qubit (i.e., an ancilla qubit that is not adjacent to a respective auxiliary ancilla qubit) is transmitted to the adjacent qubit (i.e., to an ancilla qubit that is adjacent to the respective auxiliary ancilla qubit). The information of the non-adjacent qubit regarding its quantum state transmitted to the adjacent qubit (e.g., by the SWAP operations disclosed above) can be further transmitted from the adjacent qubit to said single qubit of the corresponding chain of the two or more disconnected chains of the second plurality of qubits in a similar way as described further above in connection with **Fig.** 4. In preferred embodiments, the information regarding the quantum state of qubits from the respective at least two qubits of the first one or more qubits that are adjacent to said single qubit can be transmitted at first from these qubits to said single qubit. In the next step, the SWAP operations can be applied to the qubit that is non-adjacent to said single qubit for further transmitting the information regarding its quantum state to said single qubit as explained above. In some cases, after carrying out the transmitting step of the information regarding the quantum state of the non-adjacent qubit, a number of subsequent SWAP operations can be performed in reverse order, until the quantum states of participating qubits from the first one or more qubits return to their previous (e.g., initial) quantum states before the SWAP operations were applied. In some cases, the procedure described above can be applied to a number of qubits (e.g., to each qubit) from the at least two qubits of the first one or more qubits that are not adjacent to said single qubit.

For example, the method steps disclosed in the preceding paragraph may be elucidated by means of the embodiment shown in **Fig.** 3a. Specifically, the adjacent auxiliary ancilla qubit 2a of **Fig. 3a** is adjacent to the ancilla qubit 1a, whereas the adjacent auxiliary ancilla qubit 2a is not adjacent to the ancilla qubit 1b (e.g., because the latter are not nearest-neighbors in the sense described further above). In this case, the information regarding a quantum state of the ancilla qubit 1b and a quantum state of the ancilla qubit 1a can be swapped between these qubits via a single SWAP operation (or its decomposition into native hardware gates), so that the information regarding the quantum state of the ancilla qubit 1b is (physically) located on the ancilla qubit 1a. Next, this information (i.e., the information regarding the quantum sate of the ancilla qubit 1b) can be further transmitted from the ancilla qubit 1a to the adjacent auxiliary ancilla qubit 2a, for instance, as disclosed further above in connection with Fig. 4. Finally, an inverse SWAP operation can be applied to the ancilla qubits 1b and 1a to restore their previous (e.g., initial) quantum states before applying the SWAP operation.

The next step of the present techniques can include transmitting 615 the information regarding the quantum state from the single qubit of the corresponding chain to a respective adjacent qubit of said chain of the second plurality of qubits. For example, the auxiliary ancilla qubit 2a of **Figs. 3a** or **3b** can transmit said information regarding the quantum state (received from two ancilla qubits 1a and 1b among which only the ancilla qubit 1a is adjacent to the auxiliary ancilla qubit 2a, as in **Fig. 3a,** or both ancilla qubits 1a and 1b are adjacent to this auxiliary ancilla qubit 2a, as in **Fig. 3b)** to the auxiliary ancilla qubit 2b being adjacent with respect to the auxiliary ancilla qubit 2a. The method can further include iterative transmitting 625 the information from the respective adjacent qubit of said chain to a next qubit of the chain being adjacent with respect to the respective adjacent qubit (for example, similar to the previous embodiment, the auxiliary ancilla qubit 2b in **Figs. 3a** or **3b** may transmit the information to an adjacent qubit that is on the right side with respect to it). In this case, the next qubit of the chain can be considered to be the respective adjacent qubit for a next iteration. In some examples, the iterative transmitting 625 the information within the corresponding chain of the two or more disconnected chains of the second plurality of qubits can be carried out until the information is transmitted to a number of qubits (e.g., to each qubit) within the corresponding chain of the two or more disconnected chains. In other words, the information regarding the quantum state of ancilla qubits (e.g., two ancilla qubits 1a and 1b of **Figs. 3a** or **3b)** can be transmitted at first to a respective adjacent auxiliary ancilla qubit (e.g., to the auxiliary ancilla qubit 2a of **Figs. 3a** or **3b)** and then to other (distant) auxiliary ancilla qubits of this chain (e.g., at first to the auxiliary ancilla qubit 2b and then to other auxiliary ancilla qubits located to the right of this qubit 2b within the same chain).

In one embodiment, the present techniques can comprise initializing one or more qubits within the corresponding chain of the two or more disconnected chains of the second plurality of qubits to the zeroth quantum state $|0\rangle$ (similar to discussions related to the embodiment presented in **Fig. 4**). Thus, in this example, auxiliary ancilla qubits of the corresponding chain are initialized to their ground state introduced above. In the next step, a three-qubit quantum gate acting to the respective two qubits of the first one or more qubits (i.e., to the respective ancilla qubits) and the single qubit of the corresponding chain of the two or more disconnected chains of the second plurality of qubits (i.e., the single auxiliary ancilla qubit) can be used to transmit the information regarding the quantum state of the respective two or more qubits to said single qubit. For example, in the embodiment of **Fig. 5,** the information regarding the quantum state of two ancilla qubits 1, 2 is transmitted to the auxiliary ancilla qubit 1 using the three-qubit quantum gate. In some cases, as in the embodiment shown in **Fig. 5,** the three-qubit quantum gate can be a Toffoli gate 30. In one non-exhaustive example, the Toffoli gate can be a quantum circuit comprising a number of Hadamard gates, H; 40, a number of phase gates, *S*; 60, a number CNOT gates and a number of π/8-gates, T; 50, arranged in a corresponding order, for instance, as shown in **Fig. 5** (see, e.g., M. A. Nielsen and I. L. Chuang, "Quantum Computation and Quantum Information": 10th Anniversary Edition, Cambridge University Press, 2010). The Hadamard gate, the phase gate and the π/8-gate are single-qubit gates known to those skilled in the art. In some examples, operations carried out by one or more of the Hadamard-, π/8-, phase- and CNOT gates may comprise a respective decompositions of said operations into corresponding quantum operations carried out by native hardware gates. In some examples, when the two qubits of the first one or more qubits are both adjacent to the single qubit, the information regarding the quantum state of the respective two or more qubits can be directly transmitted to said single qubit (e.g., without involving SWAP operations mentioned above). In other examples, when one of the two qubits of the first one or more qubits is not adjacent to the single qubit (e.g., the ancilla qubit 1 of **Fig. 5** is not adjacent to the auxiliary ancilla qubit 1), the information regarding a quantum state of said non-adjacent qubit can be transmitted from said non-adjacent qubit to another qubit from the two qubits of the first one or more qubits that is adjacent to the single qubit (e.g., from the ancilla qubit 1 of **Fig. 5** to the ancilla qubit 2 adjacent to the auxiliary ancilla qubit 1). For example, a SWAP operation between the ancilla qubits 1 and 2 of **Fig. 5** can be applied right before each of a CNOT operation between the ancilla qubit 1 and the auxiliary ancilla qubit 1 of **Fig. 5**. Then, the CNOT operation can be applied between the ancilla qubit 2, which contains the information regarding the quantum state of the ancilla qubit 1, and the auxiliary ancilla qubit 1. This will be tantamount to saying that the CNOT operation takes place between the ancilla qubit 1 and the auxiliary ancilla qubit 1. In a next step, a reverse SWAP operation can be applied to the two qubits of the first one or more qubits (i.e. to the ancilla qubits 1 and 2) to restore their previous (e.g., initial) quantum states before applying the SWAP operation.

In the next step and similar to the previous embodiment shown in **Fig. 4,** a number of successive CNOT operations can be used to carry out the steps related to transmitting 615 the information regarding the quantum state from the single qubit of the corresponding chain to the respective adjacent qubit of said chain of the second plurality of qubits (e.g., from the auxiliary ancilla qubit 1 of **Fig. 5** to the auxiliary ancilla qubit 2 of **Fig. 4**) and iterative transmitting 625 the information from the respective adjacent qubit of said chain to the next qubit of the chain being adjacent with respect to the respective adjacent qubit (for example, from the auxiliary ancilla qubit 2 to other auxiliary ancilla qubits 3 and 4 as illustrated in **Fig. 4**). Similarly, as disclosed in connection with the embodiment of **Fig. 4,** one or more CNOT operations from the number of successive CNOT operations introduced above can be carried out by respective quantum CNOT gates 10. In addition or alternatively, one or more CNOT operations may comprise a respective decomposition of said one or more CNOT operations into corresponding quantum operations carried out by native hardware gates. In some examples, the step of resetting 630 the respective one or more qubits of the second plurality of qubits (i.e., auxiliary ancilla qubits) can be carried out in a manner similar to that discussed further above in connection with the embodiment presented in **Fig. 4**.

The techniques of the present disclosure can further comprise transmitting the predetermined information content (e.g., a quantum state of an ancilla qubit) to a qubit of the third plurality of qubits (e.g., to a system qubit of the corresponding chain on which one or more of the plurality of quantum computational operations has to be performed) for which no adjacent qubit from the second plurality of qubits is available (i.e., no adjacent auxiliary ancilla qubit is available). In the present techniques, this transmitting step can include transmitting the predetermined information content from a qubit of the one or more qubits of the number of qubits of the second plurality of qubits (i.e., from an auxiliary ancilla qubit) to a qubit of the respective adjacent one or more qubits of the third plurality of qubits (i.e., to a system qubit adjacent to said auxiliary ancilla qubit) by applying a SWAP operation to said qubits (i.e., the operation that swaps the quantum states of two qubits under consideration). For instance, a system qubit 3c shown in the embodiments of **Figs. 3a** and **3b** is the system qubit that does not have an adjacent auxiliary ancilla qubit. In this case, the predetermined information content from a respective adjacent auxiliary qubit can be transmitted to the system qubit 3b by a SWAP operation in agreement with the above disclosure (a dashed line on both figures indicates the adjacency between the system qubit 3b and its partner among auxiliary ancilla qubits).

The next step of the method can include transmitting the predetermined information content from the qubit of the respective adjacent one or more qubits of the third plurality of qubits to the qubit of the third plurality of qubits for which no adjacent qubit from the second plurality of qubits is available by iterative applying a number of subsequent SWAP operations between adjacent qubits of the third plurality of qubits that are arranged between said qubits. In some cases, iterative applying the number of subsequent SWAP operations is carried out until the predetermined information is swapped to a qubit of the third plurality of qubits that is adjacent to the qubit of the third plurality of qubits for which no adjacent qubit from the second plurality of qubits is available. In other words, SWAP operations between adjacent system qubits are carried out until the predetermined information of the auxiliary ancilla qubit mentioned above is swapped to a system qubit adjacent to the system qubit that has no adjacent auxiliary ancilla qubit.

Returning to the example of Fig. 3a and 3b, the system qubits 3c and 3b mentioned above are adjacent, and as a consequence, no SWAP operations are required in this case (the system qubit 3b comprises the predetermined information of the auxiliary ancilla qubit in accordance with the discussions above). On the other hand, in order to transmit the predetermined information content to a system qubit located in the lower right corner of the 2D lattice in **Fig. 3a,** a single SWAP operation may be required between the system qubits 3c and 3b. In some cases, the number of required SWAP operations can be proportional to (e.g., equal to) a number of system qubits between a respective auxiliary ancilla qubit (from which the predetermined information content is transmitted) and the system qubit for which no adjacent auxiliary ancilla qubit is available. It should be noted that the use of auxiliary ancilla qubits in the present techniques may reduce a number of time-consuming SWAP operations required to provide control, since a number of system qubits can have a respective adjacent auxiliary ancilla qubit (e.g., 50% or more, 75% or more, 90% or more, 95% of the total number N of system qubits can have the respective adjacent auxiliary ancilla qubit). Thus, in some examples of the present techniques, the number of SWAP operations needed for control can be independent on N, while in some prior art techniques the number of SWAP operations may be proportional to $N^{1/2}$.

The techniques of the present disclosure can further comprise transmitting the predetermined information content from the qubit of the third plurality of qubits that is adjacent to the qubit of the third plurality of qubits for which no adjacent qubit from the second plurality of qubits is available to said qubit of the third plurality of qubits for which no adjacent qubit from the second plurality of qubits is available (e.g., transmitting the predetermined information content from the system qubit 3c of **Fig. 3a** to the system qubit located in the lower right corner of the 2D lattice in **Fig. 3a).** In the present techniques, the qubit of the third plurality of qubits for which no adjacent qubit from the second plurality of qubits is available can be configured to receive the predetermined information content from said adjacent qubit of the third plurality of qubits. Thus, the predetermined information content of the respective auxiliary ancilla qubit (e.g., its quantum state), which is physically contained on a system qubit adjacent to the system qubit that has no adjacent auxiliary ancilla qubit, can be transmitted from said adjacent system qubit to the system qubit that has no adjacent auxiliary ancilla qubit. In some examples, transmitting the predetermined information between these system qubits can be performed in a manner similar to that used for transmitting the predetermined information between an auxiliary ancilla qubit and a respective adjacent system qubit, for example, using a number of CNOT operations (e.g., two CNOT operations) between these qubits to provide said control, as described further below in connection with **Fig. 6.**

In the next step, the method of the present specification can comprise performing a plurality of quantum computational operations on the qubit of the third plurality of qubits for which no adjacent qubit from the second plurality of qubits is available under control of the transmitted predetermined information (e.g., in a manner similar to that presented in the embodiment of **Fig. 6,** see discussions below). In some cases of the present techniques, after performing one or more operations from the plurality of quantum computational operations on said qubit (under control of the transmitted predetermined information), the present method can further include carrying out a number of subsequent SWAP operations in reverse order, until quantum states of qubits from the third plurality of qubits participating in the SWAP operations return to their previous quantum states before the SWAP operations were applied. In some cases, the procedure described above can be applied to a number of qubits (e.g., to each qubit) of the third plurality of qubits for which no adjacent qubit from the second plurality of qubits is available.

In some examples of the present techniques, the number of SWAP operations can be carried out by a respective quantum circuit for swapping two qubits. In some examples, the respective quantum circuit can comprise three CNOT quantum gates known for those skilled in the art (see, e.g., M. A. Nielsen and I. L. Chuang, "Quantum Computation and Quantum Information": 10th Anniversary Edition, Cambridge University Press, 2010). In addition or alternatively, one or more SWAP operations can comprise a respective decomposition of said SWAP operation into corresponding quantum operations carried out by native hardware gates.

In the techniques of the present disclosure, the performing 800 step of the plurality of quantum computational operations can include performing one or more controlled unitary transformations 810 applied to a respective qubit of the third plurality of qubits (i.e., system qubits), thereby modifying a quantum state of said respective qubit, wherein the one or more unitary transformations applied to the respective qubit may be controlled using the predetermined information content transmitted to the respective qubit in accordance with the above discussions. For example, the predetermined information content (e.g., a quantum state of respective one or more ancilla qubits) may be transmitted one or more times (i.e., at different moments of times) to the respective qubit during the course of quantum computational operations using a number of CNOT operations (e.g., two CNOT operations) to provide said control (see **Fig. 6** and discussions below). In some examples, the one or more unitary transformations on the respective qubit can be carried out by corresponding one or more quantum single qubit gates acting on said respective qubit (for instance, different quantum single gates can act on said respective qubit at different moments of time or time intervals). In some cases, the one or more unitary transformations carried out by the one or more quantum single qubit gates can result in a unitary time evolution of the quantum state of said respective qubit. In some examples, a plurality of unitary transformations can be performed on a number of qubits (e.g., on all qubits) of the third plurality of qubits (i.e. system qubits) under control of respective qubits from the first one or more qubits. In some cases, the plurality of unitary transformations can form a quantum computational task to be carried out on the number of qubits of the third plurality of qubits (i.e., system qubits) in parallel and/or sequentially.

In the present techniques, performing the one or more controlled unitary transformations on a respective qubit of the third plurality of qubits (i.e., system qubits) can comprise performing 820 a controlled rotation transformation, $R_a(\theta)$; 70 (see **Fig. 6** and the discussions below), applied to the respective qubit, wherein the rotation transformation is defined by a predetermined rotation angle $\theta$ around a predetermined axis a. The angle $\theta$ can be determined when a quantum computational task that includes the controlled rotation is compiled, for example, when performing quantum computational tasks related to the controlled simulation of a time evolution that is defined by a quantum Hamiltonian of a quantum system of interest (e.g., dealing with quantum chemistry or condensed matter physics). In this setting the angle $\theta$ may be predetermined by the amplitude of specific terms of the Hamiltonian and the time that is simulated, e.g., when using the quantum phase estimation (QPE) to determine the ground and/or excited states of a Hamiltonian system. In another example, the angle $\theta$ can be predetermined after the quantum computing task has been compiled, but before the quantum computing task is executed. This is the case, for example, in a variational or hybrid quantum-classical algorithm, where a quantum computing task is combined with a classical minimization and the value of $\theta$ is determined by the classical part of the hybrid algorithm as part of the minimization of a cost-function. A sequence of such controlled rotation transformations may be used, e.g., in the quantum phase estimation algorithm or in variational hybrid quantum-classical algorithms. In some cases, performing the rotation transformation, $R_a(\theta)$; 70, applied to the respective qubit can comprise applying 830 a basis rotation transformation, $V_{a,z}$, to the respective qubit (i.e., a rotation of basis vectors in which a quantum state of the respective qubit is defined), wherein the basis rotation transformation corresponds to rotating the predetermined axis $\alpha$ on a rotation axis z of the respective qubit. For example, a quantum state of the respective qubit can be defined as a vector on a Bloch sphere and the basis rotation transformation may correspond to a rotation of Bloch basis vectors. In one example, the basis rotation transformation, $V_{a,z}$, which is schematically shown in **Fig. 6,** can be defined by the corresponding operator represented, e.g., by a respective rotation matrix. Similarly, the controlled rotation transformation $R_a(\theta)$ is defined by an operator that can be represented by the corresponding rotation matrix acting on a quantum state of the respective qubit represented on the Bloch sphere.

In the next step, the method can include applying 840 the rotation transformation, $R_z(\theta/n)$, around the rotation axis z to said respective qubit, wherein the rotation transformation can be defined as a fraction of the predetermined rotation angle, $\theta/n$; 90, around the rotation axis z. Here $n$ stands for an integer number. In some examples, the rotation transformation, $R_z(\theta/2)$, is defined by an operator that can be represented by $2 \times 2$ Matrix,

e.g., by $\begin{pmatrix} e^{i\theta/n} & 0 \\ 0 & e^{-i\theta/n} \end{pmatrix}$ . In the embodiment of **Fig. 6,** $n = 2$, so that in this example the rotation transformation, $R_z(\theta/2)$, can be defined by half of the predetermined rotation angle, $\theta/2$; 90, around the rotation axis z. Then, the method of the first aspect can comprise applying 850 a CNOT operation 10 to the respective qubit and to a qubit from the one or more qubits adjacent to said respective qubit used for controlling the one or more unitary transformations on the respective qubit. Thus, by applying the CNOT operation, the predetermined information content can be transmitted from said adjacent qubit to the respective qubit on which the controlled rotation transformation $R_a(\theta)$; 70 is applied. In accordance with the above discussions, the qubit (or control qubit for short) used for controlling the one or more unitary transformations on the respective qubit of the third plurality of qubits (i.e., on the respective system qubit) can be an adjacent auxiliary ancilla qubit or an adjacent system qubit, if no adjacent auxiliary ancilla qubit with respect to the respective qubit is available. For example, the auxiliary ancilla qubit 2a of **Figs. 3a** and **3b,** which is adjacent to the system qubit 3a, can be used for controlling said unitary operations on the system qubit 3a.

The next step of the present disclosure can include applying 860 an inverse rotation transformation, $R_z(-\theta/n)$; 95, around the rotation axis z to said respective qubit, wherein the inverse rotation transformation can be defined as the fraction of the predetermined rotation angle, $\theta/n$, around the rotation axis z (i.e., the same angle $\theta/n$ is used as for the rotation transformation). In the embodiment of **Fig. 6,** the inverse rotation transformation, $R_z(-\theta/2)$, can be defined by half of the predetermined rotation angle, $\theta/2$; 90, around the rotation axis z. In the next step, the present techniques can include applying 870 a CNOT operation 10 to the respective qubit and to the qubit from the one or more qubits adjacent to said respective qubit used for controlling the one or more unitary transformations on the respective qubit (this second CNOT operation is illustrated in **Fig. 6** as the one applied to the respective qubit right after the inverse rotation transformation, $R_z(-\theta/2)$). If a control qubit, for instance, an auxiliary ancilla qubit as illustrated in **Fig. 6,** is in the zeroth quantum state $|0\rangle$ (e.g., after the initialization step disclosed further above), then a corresponding quantum state of the respective qubit remains unchanged when two CNOT operations have been applied. Thus, the respective qubit (i.e., the respective system qubit of **Fig. 6)** is rotated forth and back by the predetermined rotation angle, $\theta/n$, after applying two rotations and two CNOT operations discussed above. The results of these four operations can be represented as $R_z(\theta/n)R_z(-\theta/n) = I$, where $I$ stands for the identity operator (represented, e.g., by $2 \times 2$ identity matrix). On the other hand, if the control qubit is in the first quantum state $|1\rangle$ (e.g., after the initialization step), then the quantum state of the respective qubit can be flipped at each CNOT gate. For example, a superposition quantum state of the respective qubit, $|\psi\rangle = \delta|0\rangle + \gamma|1\rangle$, is flipped to $|\psi\rangle' = \delta|1\rangle + \gamma|0\rangle$ by a CNOT operation. In this case, the respective qubit (i.e., the respective system qubit of **Fig. 6)** is rotated forth by twice the predetermined rotation angle, $2\theta/n$, after applying two rotations and two CNOT operations discussed above. The results of these four operations can be represented as $R_z(\theta/n)R_z(\theta/n) = R_z(2\theta/n)$, where $R_z(2\theta/n)$ stands for the rotation transformation performing a rotation by the angle $2\theta/n$ around the rotation axis z (represented, e.g., by 2 x 2 rotation matrix). Returning to the example of **Fig. 6,** the respective qubit is rotated by the predetermined rotation angle $\theta$ after applying these four operations, because $n = 2$ in this embodiment.

The next step of the present techniques can comprise iteratively applying 880 a combination of the rotation transformation, $R_z(\theta/n)$, around the rotation axis z, the CNOT operation to the respective qubit and to the qubit from the one or more qubits, the inverse rotation transformation, $R_z(-\theta/n)$, around the rotation axis z, and the CNOT operation to the respective qubit and to the qubit from the one or more qubits, until resulting rotation obtained after using said combination of rotations and CNOT operations will correspond to applying the rotation transformation $R_z(\theta)$ around the rotation axis z by the predetermined rotation angle $\theta$, if the qubit from the one or more qubits used for controlling the one or more unitary transformations on the respective qubit is in a corresponding quantum state (e.g., in the first quantum state $|1\rangle$). For example, as discussed above in connection with the embodiment of **Fig. 6,** the respective qubit is rotated by the predetermined rotation angle $\theta$ after applying two rotations and two CNOT operations, if the control qubit is in the first quantum state $|1\rangle$ (e.g., prepared to this state after the initialization step), and therefore no further iterations are needed. In some cases, for example, for $n>2$, the fraction of the predetermined rotation angle $\theta/n$ around the predetermined axis $\alpha$ can be defined as the predetermined rotation angle divided by 2m, where m is any integer number. In this case, said combination of rotations and CNOT operations can be applied iteratively to the respective qubit and to the qubit from the one or more qubits 2m times, thereby rotating the respective qubit by the predetermined rotation angle $\theta$, e.g., if the control qubit is in the first quantum state $|1\rangle$. On the other hand, if the control qubit is in the zeroth quantum state $|0\rangle$, then a corresponding quantum state of the respective qubit remains unchanged under applying this iterative procedure, as explained in detail above. In the next step, an inverse basis rotation transformation $V_{a,z}^{\dagger}$ to the respective qubit can be applied 890, wherein the inverse basis rotation transformation corresponds to rotating the rotation axis z of the respective qubit back to the predetermined axis a. In some examples, the inverse basis rotation transformation $V_{a,z}^{\dagger}$ can be defined as a transformation defined by an operator (or its respective matrix representation) that is Hermitian conjugate with respect to the operator $V_{a,z}$ defining the basis rotation transformation, $V_{a,z}$. In preferred cases, the results of all method steps 830 to 880 disclosed above can correspond to the controlled rotation transformation, $R_a(\theta)$; 70, applied to the respective qubit.

In some examples of the present techniques, one or more CNOT operations used for the controlled rotation transformation, $R_a(\theta)$; 70, can be carried out by respective quantum CNOT gates. In addition or alternatively, the one or more CNOT operations may comprise a respective decomposition of said one or more CNOT operations into corresponding quantum operations carried out by native hardware gates, which, as noted further above, are gates available at a specific architecture of a quantum computer and/or a qubit topology.

The techniques of the present disclosure can further comprise performing a quantum computational task, wherein the quantum computational task comprises the plurality of quantum computational operations performed on the one or more qubits of the third plurality of qubits (i.e., on system qubits). For example, the quantum computational task can comprise one or more problems in the fields of simulation of quantum systems, computational chemistry, computational biology, solid-state physics, quantum annealing, quantum machine learning, search problems, cryptography, or the like. In some examples, one or more quantum computational operations can be performed in parallel on different system qubits. For example, a first number of operations can be performed sequentially on a first number of system qubits in parallel with a second number of operations performed sequentially on a second number of system qubits during a first time interval. In some cases, a first number of qubits of the first one or more qubits (i.e., ancilla qubits) used for control of the first number of system qubits can be initialized and/or transmit the predetermined information content (e.g., their quantum state) to the first number of system qubits in parallel with performing the second number of operations on the second number of system qubits during a second time interval (which may be equal to or different from the first time interval). Thus, the techniques of the present disclosure may provide additional reduction in computational time compared to some prior art techniques that do not use auxiliary ancilla qubits, and as a consequence, cannot take advantage of the parallel operations in the above mentioned sense.

A second aspect provides a quantum computing system 1000 configured in accordance with any of the steps of the techniques according to the first aspect.

A third aspect provides a quantum computing system 1000 to perform controlled quantum computational operations and adapted to perform any one of the steps of the techniques according to the first aspect. In some examples, the quantum computing system of the third aspect is configured in accordance with the quantum computing system of the second aspect. The present disclosure also relates to a computer program adapted to perform any of the steps of the techniques according to the first aspect. The present disclosure also relates to a computer-readable medium (e.g., machine-readable storage medium such as optical storage medium or read-only memory, e.g., FLASH memory) and signals that store or encode the computer program of the present disclosure.

The quantum computing system of the second and/or third aspect may include at least one processor (e.g., a quantum processor), at least one memory (which may include programs that, when executed, carry out the method steps according to the first aspect or the computer program of the present disclosure), and at least one interface for inputs and outputs. In some examples, the quantum computing system can comprise a hardware architecture comprising, for example, one or any combination of one or more chips, a quantum data plane, a control plane, a measurement plane, a control processor plane, a host processor, or the like. The hardware architecture of the quantum computing system of the second and/or third aspect can be based on qubits coupled to high-finesse cavities (e.g., superconducting qubits coupled to a microwave cavity), as described further above. In other examples, the quantum computing system can comprise a hardware architecture based on qubits realized as the nuclear spin states of donor atoms embedded into a respective host lattice. In still other examples, the quantum computing system can comprise a hardware architecture based on neutral atoms in optical lattices. In some examples, the quantum computing system can be a stand-alone computer device. In other examples, the quantum computing system can be integrated in a computer device or system which also serves other purposes than carrying out the steps of the techniques of the present disclosure. In yet other examples, the quantum computing system may be a distributed system that communicates over a network (e.g., the Internet).

A fourth general aspect of the present disclosure relates to a remote computing system comprising a quantum computing system, wherein the remote computing system may be configured to perform a quantum computational task, wherein the quantum computational task can comprise a plurality of quantum computational operations to be executed on respective qubits in accordance with the first aspect. The plurality of quantum computational operations of the fourth aspect (carried out by the remote computing system) can be controlled in accordance with any one of the method steps of the first aspect. In some examples, the remote computing system may be configured to receive inquiry from a computer-implemented system (which is, e.g., external with respect to the remote computing system) regarding the quantum computational task. The remote computing system of the fourth aspect can be further configured to transmit results of the computational task (e.g., based on the plurality of controlled quantum computational operations performed on system qubits) to a computer-implemented system (e.g., to the computer-implemented system from which the inquiry was sent). In some examples, a hardware architecture of the quantum computing system of the fourth aspect can comprise one or more building elements (or blocks of elements) of the hardware architecture of the quantum computing system from the second and/or third aspect disclosed above. In some cases, the hardware architecture of the quantum computing system of the fourth aspect may be the same as the hardware architecture of the quantum computing system from the second and/or third aspect disclosed above.

## Claims

1. A method for configuring a quantum computing system, wherein the quantum computing system comprises a plurality of qubits arranged on a two-dimensional (2D) lattice, the method comprising:

    receiving a selection (100) of first one or more qubits (15; 1a-1c) of the plurality of qubits, wherein the first one or more qubits are configured to be initialized to a predetermined information content;

receiving a selection (200) of a second plurality of qubits (16; 2a-2c) of the plurality of qubits, wherein one or more qubits (2a; 2c) of the second plurality of qubits are adjacent to respective at least one qubit (1a; 1c) of the first one or more qubits and are configured to receive the predetermined information content from the respective at least one qubit of the first one or more qubits;

receiving a selection (300) of a third plurality of qubits (17; 3a-3c) of the plurality of qubits configured to perform a plurality of quantum computational operations,

wherein a quantum computational operation of the plurality of quantum computational operations on each qubit of the third plurality of qubits is controlled using the predetermined information content from the respective at least one qubit of the first one or more qubits,

wherein each qubit (2a) from a number of qubits of the second plurality of qubits is adjacent to at least one qubit (3a) of the third plurality of qubits, and

wherein each qubit (3a) of the third plurality of qubits that is adjacent to a respective qubit (2a) from the number of qubits of the second plurality of qubits is configured to receive the predetermined information content from said respective qubit.

**2.** The method of claim 1, wherein the method includes, after carrying out the receiving selection steps of claim 1, controlling a quantum computing system comprising:

initializing (400) the respective at least one qubit of the first one or more qubits to the predetermined information content;

transmitting (500) the predetermined information content of the respective at least one qubit of the first one or more qubits to the one or more qubits of the second plurality of qubits adjacent to the respective at least one qubit of the first one or more qubits;

transmitting (600) the predetermined information content of the one or more qubits (2a; 2c) of the second plurality of qubits to respective other qubits (2b) of the second plurality of qubits, wherein the respective other qubits of the second plurality of qubits are configured to receive the predetermined information content from said one or more qubits (2a; 2c) of the second plurality of qubits;

transmitting (700) the predetermined information content of one or more qubits (2a) of the number of qubits of the second plurality of qubits to respective adjacent one or more qubits (3a) of the third plurality of qubits;

performing (800) a plurality of quantum computational operations on the one or more qubits (3a-3c) of the third plurality of qubits, wherein the plurality of quantum computational operations on said one or more qubits are controlled using the predetermined information content transmitted to the one or more qubits of the third plurality of qubits.

**3.** The method of claim 1 or 2, wherein the first, second and third plurality of qubits form a corresponding number of chains on the 2D lattice,

wherein the first one or more qubits extends in a first direction comprising one or more chains of qubits,

wherein the second plurality of qubits extends in a second direction different from the first direction,

wherein the second plurality of qubits comprises two or more disconnected chains of qubits,

wherein the third plurality of qubits comprises multiple connected chains of qubits, wherein each chain of the multiple connected chains of the third plurality of qubits extends in one of the first and second directions.

**4.** The method of claims 2 or 3, wherein the predetermined information content of the first one or more qubits comprises information regarding a quantum state ($|\psi\rangle$) of said one or more qubits, wherein the quantum state is one of:

a single-qubit quantum state, when the predetermined information content relates to a single qubit of the first one or more qubits, wherein the quantum state of the single qubit of the first one or more qubits can be a zeroth quantum state ($|0\rangle$), a first quantum state ($|1\rangle$), or a linear superposition of the zeroth and first quantum states ($\alpha|0\rangle + \beta|1\rangle$);

a multi-qubit quantum state, when the predetermined information content relates to at least two qubits of the first one or more qubits, wherein the multi-qubit quantum state is a tensor product state ($|\varphi\rangle_1 \otimes |\varphi\rangle_2 \cdots \otimes |\varphi\rangle_N$) involving the tensor product of each single-qubit quantum state of the at least two qubits of the first one or more qubits or an entangled state ($|\psi\rangle$).

**5.** The method of claim 3 and 4 the method further comprises:

initializing (410) the respective at least one qubit of the first one or more qubits to the quantum state;

transmitting (510) the information regarding the quantum state of one qubit of the respective at least one qubit of the first one or more qubits from said one qubit to a single qubit of a corresponding chain of the two or more disconnected chains of the second plurality of qubits,

wherein said single qubit is adjacent to the one qubit of the respective at least one qubit of the first one or more qubits;

transmitting (610) the information regarding the quantum state from the single qubit of the corresponding chain of the two or more disconnected chains of the second plurality of qubits to a respective adjacent qubit of said chain;

iterative transmitting (620) the information from the respective adjacent qubit of said chain to a next qubit of the chain being adjacent with respect to the respective adjacent qubit, wherein the next qubit of the chain is considered to be the respective adjacent qubit for a next iteration, optionally wherein the iterative transmitting the information within the corresponding chain of the two or more disconnected chains of the second plurality of qubits is carried out until the information is transmitted to a number of qubits within the corresponding chain of the two or more disconnected chains.

6. The method of claim 5, the method further comprising:

initializing one or more qubits within the corresponding chain of the two or more disconnected chains of the second plurality of qubits to the zeroth quantum state ($|0\rangle$);

using a number of successive controlled NOT (CNOT) operations (10) between respective adjacent qubits of the two or more disconnected chains to carry out the transmitting steps (510, 610, 620) of claim 5, optionally wherein one or more CNOT operations from the number of successive CNOT operations are carried out by respective quantum CNOT gates.

7. The method claim 5 or 6, the method further comprising resetting (630) the respective one or more qubits of the second plurality of qubits to the zeroth quantum state ($|0\rangle$) after performing one or more quantum computational operations of the plurality of quantum computational operations on the one or more qubits (3a-3c) of the third plurality of qubits to which the respective one or more qubits of the second plurality of qubits transmitted the predetermined information content, optionally wherein the resetting (630) includes applying a number of successive CNOT operations (10) between respective adjacent qubits of the two or more disconnected chains.

8. The method of claim 3 and 4, the method further comprises:

initializing (415) respective at least two qubits of the first one or more qubits to the quantum state;

transmitting (515) the information regarding a quantum state of the respective at least two qubits of the first one or more qubits from said qubits to a single qubit of a corresponding chain of the two or more disconnected chains of the second plurality of qubits,

wherein said single qubit is adjacent to one or more qubits of the respective at least two qubits of the first one or more qubits;

transmitting (615) the information regarding the quantum state from the single qubit of the corresponding chain to a respective adjacent qubit of said chain of the second plurality of qubits;

iterative transmitting (625) the information from the respective adjacent qubit of said chain to a next qubit of the chain being adjacent with respect to the respective adjacent qubit, wherein the next qubit of the chain is considered to be the respective adjacent qubit for a next iteration, optionally wherein the iterative transmitting the information within the corresponding chain of the two or more disconnected chains of the second plurality of qubits is carried out until the information is transmitted to a number of qubits within the corresponding chain of the two or more disconnected chains.

9. The method of any one of claims 2 to 8, the method further comprising transmitting the predetermined information content to a qubit of the third plurality of qubits for which no adjacent qubit from the second plurality of qubits is available, wherein the transmitting step further comprises:

transmitting the predetermined information content from a qubit of the one or more qubits of the number of qubits of the second plurality of qubits to a qubit of the respective adjacent one or more qubits of the third plurality of qubits by applying a SWAP operation to said qubits;

transmitting the predetermined information content from the qubit of the respective adjacent one or more qubits of the third plurality of qubits to the qubit of the third plurality of qubits for which no adjacent qubit from the second plurality of qubits is available by iterative applying a number of subsequent SWAP operations between adjacent qubits of the third plurality of qubits that are arranged between said qubits, wherein iterative applying the number of subsequent SWAP operations is carried out until the predetermined information is swapped to a qubit of the third plurality of qubits that is adjacent to the qubit of the third plurality of qubits for which no adjacent qubit from the second plurality of qubits is available;

transmitting the predetermined information content from the qubit of the third plurality of qubits that is adjacent to the qubit of the third plurality of qubits for which no adjacent qubit from the second plurality of qubits is available to said qubit of the third plurality of qubits for which no adjacent qubit from the second plurality of qubits is available,

wherein the qubit of the third plurality of qubits for which no adjacent qubit from the second plurality of qubits is available is configured to receive the predetermined information content from said adjacent qubit of the third plurality of qubits;

performing a plurality of quantum computational operations on the qubit of the third plurality of qubits for which no adjacent qubit from the second plurality of qubits is available under control of the transmitted predetermined information.

10. The method of any one of claims 1 to 9, wherein performing (800) the plurality of quantum computational operations includes performing one or more controlled unitary transformations (810) applied to a respective qubit of the third plurality of qubits, thereby modifying a quantum state of said respective qubit, wherein the one or more unitary transformations on the respective qubit are controlled using the predetermined information content transmitted to the respective qubit,

optionally wherein performing the one or more controlled unitary transformations on a respective qubit of the third plurality of qubits comprises performing (820) a controlled rotation transformation ($R_\alpha(\theta)$; 70) applied to the respective qubit, wherein the rotation transformation is defined by a predetermined rotation angle ($\theta$) around a predetermined axis (a).

11. The method of claim 10, wherein performing (820) the controlled rotation transformation ($R_\alpha(\theta)$; 70) applied to the respective qubit comprises:

applying (830) a basis rotation transformation ($V_{a,z}$) to the respective qubit, wherein the basis rotation transformation corresponds to rotating the predetermined axis (a) on a rotation axis (z) of the respective qubit;

applying (840) the rotation transformation ($R_z(\theta/n)$) around the rotation axis (z) to said respective qubit, wherein the rotation transformation is defined as a fraction of the predetermined rotation angle ($\theta/n$) around the rotation axis (z);

applying (850) a CNOT operation (10) to the respective qubit and to a qubit from the one or more qubits adjacent to said respective qubit used for controlling the one or more unitary transformations on the respective qubit;

applying (860) an inverse rotation transforma-

tion (($R_z(-\theta/n)$; 95) around the rotation axis (z) to said respective qubit, wherein the inverse rotation transformation is defined as the fraction of the predetermined rotation angle ($\theta/n$) around the rotation axis (z);

applying (870) a CNOT operation 10 to the respective qubit and to the qubit from the one or more qubits adjacent to said respective qubit used for controlling the one or more unitary transformations on the respective qubit;

iteratively applying (880) a combination of the rotation transformation ($R_z(\theta/n)$) around the rotation axis (z), the CNOT operation to the respective qubit and to the qubit from the one or more qubits, the inverse rotation transformation ($R_z(-\theta/n)$) around the rotation axis (z), and the CNOT operation to the respective qubit and to the qubit from the one or more qubits, until resulting rotation obtained after using said combination of rotations and CNOT operations will correspond to applying the rotation transformation ($R_z(\theta)$) around the rotation axis (z) by the predetermined rotation angle ($\theta$), if the qubit from the one or more qubits used for controlling the one or more unitary transformations on the respective qubit is in a corresponding quantum state;

applying (890) an inverse basis rotation transformation $(V_{a,z}^\dagger)$ to the respective qubit, wherein the inverse basis rotation transformation corresponds to rotating the rotation axis (z) of the respective qubit back to the predetermined axis (a),

optionally wherein the fraction of the predetermined rotation angle ($\theta/n$) around the rotation axis (z) is defined as the predetermined rotation angle divided by 2m, where m is any integer number, wherein said combination of rotations and CNOT operations is applied iteratively to the respective qubit and to the qubit from the one or more qubits 2m times.

12. The method of any one of claims 1 to 11, the method further comprises performing a quantum computational task, wherein the quantum computational task comprises the plurality of quantum computational operations performed on the one or more qubits of the third plurality of qubits.

13. A quantum computing system (1000) configured in accordance with the method steps of any one of claims 1 to 12.

14. A quantum computing system (1000) configured to perform controlled quantum computational operations and adapted to perform the method steps of any one of claims 2 to 12.

**15.** Remote computing system comprising a quantum computing system (1000), the remote computing system adapted to:

    perform a quantum computational task, wherein the quantum computational task comprises a plurality of quantum computational operations in accordance with the method of claim 12, wherein the plurality of quantum computational operations are controlled in accordance with the method steps of any one of claims 2 to 12; transmit results of the computational task to a computer-implemented system.

# Fig. 1A

EP 4 181 032 A1

# Fig. 1B

# Fig. 1C

| 415 | | 515 | | 615 | | 625 |
|---|---|---|---|---|---|---|

EP 4 181 032 A1

# Fig. 1D

800 → 810 → 820 → 830 → 840 → 850

850 → 860

860 → 870

870 → 880 → 890

# Fig. 2

## Fig. 3A

## Fig. 3B

EP 4 181 032 A1

Fig. 4

EP 4 181 032 A1

## Fig. 5

## Fig. 6

EP 4 181 032 A1

Europäisches
Patentamt

European
Patent Office

Office européen
des brevets

# EUROPEAN SEARCH REPORT

Application Number

EP 21 20 8080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/378032 A1 (KLIUCHNIKOV VADYM [US] ET AL) 12 December 2019 (2019-12-12) * abstract * * paragraph [0002] – paragraph [0008] * * paragraph [0037] – paragraph [0046] * * paragraph [0108] – paragraph [0180]; figures 1-13 * | 1-15 | INV. G06N10/40 G06N10/20 G06N10/80 |
| X | ROTTA DAVIDE ET AL: "Maximum density of quantum information in a scalable CMOS implementation of the hybrid qubit architecture", QUANTUM INFORMATION PROCESSING, SPRINGER US, NEW YORK, vol. 15, no. 6, 21 March 2016 (2016-03-21) , pages 2253-2274, XP035695360, ISSN: 1570-0755, DOI: 10.1007/S11128-016-1282-3 [retrieved on 2016-03-21] * abstract * * section 2.2 – chapter 5; page 2257 – page 2271; figures 3-12 * | 1-15 | |

TECHNICAL FIELDS
SEARCHED      (IPC)

G06N

The present search report has been drawn up for all claims

| Place of search | Date of completion of the search | Examiner |
|---|---|---|
| The Hague | 13 April 2022 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 8080

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2022

| Patent document cited in search report | | Publication date | Patent family member(s) | | Publication date |
|---|---|---|---|---|---|
| US 2019378032 | A1 | 12-12-2019 | CN 112272833 | A | 26-01-2021 |
| | | | EP 3788564 | A2 | 10-03-2021 |
| | | | US 2019378032 | A1 | 12-12-2019 |
| | | | WO 2019236712 | A2 | 12-12-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. GRUMBLING ; M. HOROWITZ.** Quantum Computing: Progress and Prospects. The National Academies Press, 2019
- **M. A. NIELSEN ; I. L. CHUANG.** Quantum Computation and Quantum Information. Cambridge University Press, 2010

- **M. A. NIELSEN ; I. L. CHUANG.** Quantum Computation and Quantum Information. University Press, 2010